# EUROPEAN PATENT APPLICATION

(11) **EP 4 202 666 A1**
(43) Date of publication of application: **28.06.2023**
(21) Application number: 21865982.9
(22) Date of filing: 08.09.2021
(51) Int. Cl.: G06F 9/451

(54) **APPLICATION ACCESS METHOD AND RELATED APPARATUS**

(30) Priority: 10.09.2020 CN 202010949304; 30.09.2020 CN 202011062423
(71) Applicant: Huawei Technologies Co., Ltd., Shenzhen, Guangdong 518129 (CN)
(72) Inventor: GUO, Kun, Shenzhen, Guangdong 518129 (CN); WEI, Zheng, Shenzhen, Guangdong 518129 (CN); ZHANG, Shizhao, Shenzhen, Guangdong 518129 (CN); WANG, Li, Shenzhen, Guangdong 518129 (CN)
(74) Representative: Pfenning, Meinig & Partner mbB
(86) International application number: PCT/CN2021/117075
(87) International publication number: WO 2022/052928

(57) **Abstract**

This application discloses an application access method and a related apparatus. The application access method includes: A first electronic device runs a target application, and obtains first display content of the target application; the first electronic device obtains a screen display parameter of a second electronic device; the first electronic device determines display data based on the first display content and the screen display parameter of the second electronic device, where the display data includes a display location and a display size of the first display content; and the first electronic device sends the display data to the second electronic device, and the second electronic device displays an application interface of the target application based on the display data. In this method, the first electronic device adaptively arranges display content of the target application based on the screen display parameter of the second electronic device, and then displays the display content on a display of the second electronic device through projection, so that a user may operate target application software on the second electronic device, and access of the target application software to the second electronic device is completed.

## Description

This application claims priority to Chinese Patent Application No. 202011062423.8, filed with the China National Intellectual Property Administration on September 30, 2020 and entitled "APPLICATION ACCESS METHOD AND RELATED APPARATUS", and priority to Chinese Patent Application No. 202010949304.8, filed with the China National Intellectual Property Administration on September 10, 2020 and entitled "APPLICATION ACCESS METHOD AND RELATED APPARATUS", which are incorporated herein by reference in their entireties.

### TECHNICAL FIELD

This application relates to the field of electronic technologies, and in particular, to an application access method and a related apparatus.

### BACKGROUND

Currently, there are various automobile screens. If an application vendor wants to develop a vehicle-mounted terminal application, the application vendor needs to develop various UIs to adapt to vehicle-mounted terminal screens of different sizes, resolutions, and shapes. Because there are various vehicle-mounted terminal screens, a workload of developing a vehicle-mounted terminal application is heavy.

Currently, application vendors independently develop respective vehicle-mounted terminal applications. Most of the development time is spent on optimizing application UIs to adapt to various vehicle-mounted terminal screens. Because UI design styles of the application vendors are different, it is difficult to unify UI styles of applications on a same vehicle-mounted terminal, and it is also difficult to bring good experience to users. In addition, it is relatively difficult to develop an application on an automobile. This reduces willingness of the application vendors to develop the vehicle-mounted terminal applications, and is unfavorable to ecosystem construction of the Internet of vehicles.

### SUMMARY

This application provides an application access method and a related apparatus, to implement adaptation and access of target application software on displays of different sizes. In this way, an application vendor can develop application software applicable to the displays of different sizes without paying attention to a UI. This improves development efficiency.

According to a first aspect, this application provides an application access method, applied to a first electronic device and a second electronic device. The first electronic device establishes a communication connection to the second electronic device. The method includes: The first electronic device runs a target application, and obtains first display content of the target application; the first electronic device obtains a screen display parameter of the first electronic device; the first electronic device obtains a screen display parameter of a second electronic device; the first electronic device determines first display data based on the first display content and the screen display parameter of the first electronic device; the first electronic device determines second display data based on the first display content and the screen display parameter of the second electronic device; the first electronic device displays a first interface based on the first display data; the first electronic device sends the second display data to the second electronic device; and the second electronic device displays a second interface on a display of the second electronic device based on the second display data, where a layout of a control in the first interface is different from a layout of a control in the second interface.

The screen display parameter includes a screen size (a length and a width), resolution, and the like. Embodiments of this application provide an application template CarKit.aar for application vendors. Based on the application template, the application vendors do not need to pay attention to the UIs, and only need to implement an interface declared in the CarKit.aar, to develop application software applicable to the second electronic device. This greatly improves development efficiency. The application vendors can complete adaptation development on the target application software based on the CarKit.aar. The target application software is installed and is run on the first electronic device. When the first electronic device is successfully connected to the second electronic device, the first electronic device obtains a screen size of the display of the second electronic device. Based on the screen size of the display of the second electronic device and display content of the target application, the CarKit completes a layout of the display content. The first electronic device draws a display interface adapted to the screen size of the second electronic device, and projects the display content of the target application to the display of the second electronic device for display. A user can operate the target application software on the second electronic device, to complete access of the target application software to the second electronic device.

Based on a screen size of a display of the first electronic device and the display content of the target application, the first electronic device draws a display interface adapted to the screen size of the first electronic device, and displays the display content of the target application on the display of the first electronic device. In other words, the target application displays one set of user interfaces separately on the display of the first electronic device and the display of the second electronic device. The user interface displayed on the first electronic device is arranged by a map application, and the user interface displayed on the second electronic device is arranged by the CarKit.

With reference to the first aspect, in a possible implementation, the method further includes: The second electronic device receives a first touch operation performed on the second interface; the second electronic device sends a touch parameter of the first touch operation to the first electronic device; the first electronic device determines, based on the touch parameter of the first touch operation and the second display data, a function triggered by the first touch operation; the first electronic device obtains second display content of the target application based on the function triggered by the first touch operation; the first electronic device determines third display data based on the second display content and the screen display parameter of the second electronic device; the first electronic device sends the third display data to the second electronic device; and the second electronic device displays a third interface on the display of the second electronic device based on the third display data.

A manner in which the user operates the target application on the second electronic device is provided herein. When the user operates the target application on the second electronic device, the second electronic device provides a touch parameter of the operation for the first electronic device. The touch parameter may indicate a touch coordinate, a touch manner (tap or slide), a control on which the touch operation is performed, an event triggered by the touch operation (text input on a control), or the like. The Carkit in the first electronic device calls a corresponding method and interface based on the touch parameter, to obtain display content from the map application, then the CarKit arranges the display content, and the display content is displayed on the display of the second electronic device. Operating the target application on the second electronic device does not affect the display interface of the first electronic device.

With reference to the first aspect, in a possible implementation, the method further includes: the first electronic device receives a second touch operation performed on the first interface; the first electronic device determines, based on a touch parameter of the second touch operation and the first display data, a function triggered by the second touch operation; the first electronic device obtains third display content of the target application based on the function triggered by the second touch operation; the first electronic device determines fourth display data based on the third display content and the screen display parameter of the first electronic device; and the first electronic device displays a fourth interface based on the fourth display data.

A manner in which the user operates the target application on the first electronic device is provided herein. When the user operates the target application on the first electronic device, the first electronic device provides a touch parameter (a touch coordinate, input text, and the like) of the operation for the target application. The target application arranges a display interface and displays the display interface on the display of the first electronic device. Operating the target application on the first electronic device does not affect the display interface of the second electronic device.

With reference to the first aspect, in a possible implementation, the screen display parameter includes a screen length and a screen width. The method further includes: the first electronic device obtains a screen display parameter of a third electronic device, where a screen length of the third electronic device is greater than a screen length of the second electronic device; the first electronic device determines fifth display data based on the first display content and the screen display parameter of the third electronic device; the first electronic device sends the fifth display data to the third electronic device; and the third electronic device displays a fifth interface on a display of the third electronic device based on the fifth display data, where a display length of a first function control in the fifth interface is greater than a display length of the first function control in the second interface. Herein, a layout rule is described as an example. When a screen length of the third electronic device is greater than a screen length of the second electronic device, a display length of a control displayed on the third electronic device may be greater than a display length of a control displayed on the second electronic device. That is, a display length of a control is positively correlated with a length of a display. Embodiments of this application further provides some layout rules, such as stretching, zooming, hiding, equalization, proportioning, wrapping, and extending.

With reference to the first aspect, in a possible implementation, when the target application is a map application, the first display content includes a base map and one or more function controls, the one or more function controls include a search box control, and the second display content includes a historical search record. That the first electronic device determines, based on the touch parameter of the first touch operation and the second display data, a function triggered by the first touch operation specifically includes: The first electronic device determines, based on the touch parameter of the first touch operation and the second display data, that the first touch operation is a user operation for the search box control. After the Carkit in the first electronic device determines that the first touch operation is the user operation for the search box control, the Carkit calls a corresponding method and interface (for example, a searchaddress method and an onsearchaddress interface) based on the touch parameter to obtain display content from the map application. The map application obtains corresponding data based on the searchaddress method, and provides the data to the CarKit through the onsearchaddress interface. Then, the CarKit arranges the data, and the data is displayed on the display of the second electronic device.

In a possible implementation, the method further includes: the second electronic device receives a third touch operation performed on the third interface; the second electronic device sends a touch parameter of the third touch operation to the first electronic device; the first electronic device determines, based on the touch parameter of the third touch operation and the third display data, that the second touch operation is a user operation of entering first text into the search box control; the first electronic device obtains first address information in which the first text is used as a destination; the first electronic device determines sixth display data based on the first address information and the screen display parameter of the second electronic device; the first electronic device sends the sixth display data to the second electronic device; and the second electronic device displays a sixth interface on the display of the second electronic device based on the sixth display data.

In a possible implementation, the sixth display data includes the first address information and a navigation start control. The method further includes: the second electronic device receives a fourth touch operation performed on the sixth interface; the second electronic device sends a touch parameter of the fourth touch operation to the first electronic device; the first electronic device determines, based on the touch parameter of the fourth touch operation and the sixth display data, that the fourth touch operation is a user operation for the navigation start control; the first electronic device obtains navigation information in which a current location of the second electronic device is used as a departure place and the first address information is used as a destination; the first electronic device determines seventh display data based on the navigation information and the screen display parameter of the second electronic device; the first electronic device sends the seventh display data to the second electronic device; and the second electronic device displays a seventh interface on the display of the second electronic device based on the seventh display data.

In a possible implementation, the navigation information includes at least one of the following: a distance to a next intersection, a driving direction at the next intersection, a name of a road at the next intersection, a remaining distance to the destination, a driving speed, a time required to reach the destination, a remaining time required to reach the destination, a real scene picture, a road condition, or driving route information. The foregoing embodiment specifically describes an operation procedure from a home page interface to an address search page interface to a navigation interface in a map application.

With reference to the first aspect, in a possible implementation, when the target application is a music application, the first display content includes one or more pictures and one or more function controls, the one or more function controls include a playback start control, and the second display content includes playback progress indication information. That the first electronic device determines, based on the touch parameter of the first touch operation and the second display data, a function triggered by the first touch operation specifically includes: The first electronic device determines, based on the touch parameter of the first touch operation and the second display data, that the first touch operation is a user operation for the playback start control.

In a possible implementation, the method further includes: the first electronic device sends audio data corresponding to the second display content to the second electronic device; and the second electronic device plays the audio data through a speaker of the second electronic device. The foregoing embodiment specifically describes an operation procedure from a home page interface to a music playback page interface in a music application.

With reference to the first aspect, in a possible implementation, the second electronic device is a vehicle-mounted terminal. The first electronic device may be a mobile phone.

According to a second aspect, this application provides an application access system, including a first electronic device and a second electronic device. The first electronic device is configured to run a target application, and obtain first display content of the target application; the first electronic device is further configured to obtain a screen display parameter of the first electronic device; the first electronic device is further configured to obtain a screen display parameter of the second electronic device; the first electronic device is further configured to determine first display data based on the first display content and the screen display parameter of the first electronic device; the first electronic device is further configured to determine second display data based on the first display content and the screen display parameter of the second electronic device; the first electronic device is further configured to display a first interface based on the first display data; the first electronic device is further configured to send the second display data to the second electronic device; and the second electronic device is configured to display a second interface on a display of the second electronic device based on the second display data, where a layout of a control in the first interface is different from a layout of a control in the second interface.

The screen display parameter includes a screen size (a length and a width), resolution, and the like. Embodiments of this application provide an application template CarKit.aar for application vendors. Based on the application template, the application vendors do not need to pay attention to the UIs, and only need to implement an interface declared in the CarKit.aar, to develop application software applicable to the second electronic device. This greatly improves development efficiency. The application vendors can complete adaptation development on the target application software based on the CarKit.aar. The target application software is installed and is run on the first electronic device. When the first electronic device is successfully connected to the second electronic device, the first electronic device obtains a screen size of the display of the second electronic device. Based on the screen size of the display of the second electronic device and display content of the target application, the CarKit completes a layout of the display content. The first electronic device draws a display interface adapted to the screen size of the second electronic device, and projects the display content of the target application to the display of the second electronic device for display. A user can operate the target application software on the second electronic device, to complete access of the target application software to the second electronic device.

Based on a screen size of a display of the first electronic device and the display content of the target application, the first electronic device draws a display interface adapted to the screen size of the first electronic device, and displays the display content of the target application on the display of the first electronic device. In other words, the target application displays one set of user interfaces separately on the display of the first electronic device and the display of the second electronic device. The user interface displayed on the first electronic device is arranged by a map application, and the user interface displayed on the second electronic device is arranged by the CarKit.

With reference to the second aspect, in a possible implementation, the second device is further configured to receive a first touch operation performed on the second interface; the second electronic device is further configured to send a touch parameter of the first touch operation to the first electronic device; the first electronic device is further configured to determine, based on the touch parameter of the first touch operation and the second display data, a function triggered by the first touch operation; the first electronic device is further configured to obtain second display content of the target application based on the function triggered by the first touch operation; the first electronic device is further configured to determine third display data based on the second display content and the screen display parameter of the second electronic device; the first electronic device is further configured to send the third display data to the second electronic device; and the second electronic device is further configured to display a third interface on the display of the second electronic device based on the third display data.

A manner in which the user operates the target application on the second electronic device is provided herein. When the user operates the target application on the second electronic device, the second electronic device provides a touch parameter of the operation for the first electronic device. The touch parameter may indicate a touch coordinate, a touch manner (tap or slide), a control on which the touch operation acts, an event triggered by the touch operation (text input on a control), or the like. The Carkit in the first electronic device calls a corresponding method and interface based on the touch parameter, to obtain display content from the map application, then the CarKit arranges the display content, and the display content is displayed on the display of the second electronic device. Operating the target application on the second electronic device does not affect the display interface of the first electronic device.

With reference to the second aspect, in a possible implementation, the first electronic device is further configured to receive a second touch operation performed on the first interface; the first electronic device is further configured to determine, based on the touch parameter of the second touch operation and the first display data, a function triggered by the second touch operation; the first electronic device is further configured to obtain third display content of the target application based on the function triggered by the second touch operation; the first electronic device is further configured to determine fourth display data based on the third display content and the screen display parameter of the first electronic device; and the first electronic device is further configured to display a fourth interface based on the fourth display data.

A manner in which the user operates the target application on the first electronic device is provided herein. When the user operates the target application on the first electronic device, the first electronic device provides a touch parameter (a touch coordinate, input text, and the like) of the operation for the target application. The target application arranges a display interface and displays the display interface on the display of the first electronic device. Operating the target application on the first electronic device does not affect the display interface of the second electronic device.

With reference to the second aspect, in a possible implementation, the system further includes a third electronic device; and the screen display parameter includes a screen length and a screen width; the first electronic device is further configured to obtain a screen display parameter of the third electronic device, where a screen length of the third electronic device is greater than a screen length of the second electronic device; the first electronic device is further configured to determine fifth display data based on the first display content and the screen display parameter of the third electronic device; the first electronic device is further configured to send the fifth display data to the third electronic device; and the third electronic device is configured to display a fifth interface on a display of the third electronic device based on the fifth display data, where a display length of a first function control in the fifth interface is greater than a display length of the first function control in the second interface. Herein, a layout rule is described as an example. When a screen length of the third electronic device is greater than a screen length of the second electronic device, a display length of a control displayed on the third electronic device may be greater than a display length of a control displayed on the second electronic device. That is, a display length of a control is positively correlated with a length of a display. Embodiments of this application further provides some layout rules, such as stretching, zooming, hiding, equalization, proportioning, wrapping, and extending.

With reference to the second aspect, in a possible implementation, when the target application is a map application, the first display content includes a base map and one or more function controls, the one or more function controls include a search box control, and the second display content includes a historical search record; and the first electronic device is further configured to determine, based on the touch parameter of the first touch operation and the second display data, that the first touch operation is a user operation for the search box control. After the Carkit in the first electronic device determines that the first touch operation is the user operation for the search box control, the Carkit calls a corresponding method and interface (for example, a searchaddress method and an onsearchaddress interface) based on the touch parameter to obtain display content from the map application. The map application obtains corresponding data based on the searchaddress method, and provides the data to the CarKit through the onsearchaddress interface. Then, the CarKit arranges the data, and the data is displayed on the display of the second electronic device.

In a possible implementation, the second electronic device is further configured to receive a third touch operation performed on the third interface; the second electronic device is further configured to send touch parameter of the third touch operation to the first electronic device; the first electronic device is further configured to determine, based on the touch parameter of the third touch operation and the third display data, that the second touch operation is a user operation of entering first text into the search box control; the first electronic device is further configured to obtain first address information in which the first text is used as a first destination; the first electronic device is further configured to determine sixth display data based on the first address information and the screen display parameter of the second electronic device; the first electronic device is further configured to send the sixth display data to the second electronic device; and the second electronic device is further configured to display a sixth interface on the display of the second electronic device based on the sixth display data.

In a possible implementation, the sixth display data includes the first address information and a navigation start control; the second electronic device is further configured to receive a fourth touch operation performed on the sixth interface; the second electronic device is further configured to send a touch parameter of the fourth touch operation to the first electronic device; the first electronic device is further configured to determine, based on the touch parameter of the fourth touch operation and the sixth display data, that the fourth touch operation is a user operation for the navigation start control; the first electronic device is further configured to obtain navigation information in which a current location of the second electronic device is used as a departure place and the first address information is used as a destination; the first electronic device is further configured to determine seventh display data based on the navigation information and screen display parameter of the second electronic device; the first electronic device is further configured to send the seventh display data to the second electronic device; and the second electronic device is further configured to display a seventh interface on the display of the second electronic device based on the seventh display data.

In a possible implementation, the navigation information includes at least one of the following: a distance to a next intersection, a driving direction at the next intersection, a name of a road at the next intersection, a remaining distance to the destination, a driving speed, a time required to reach the destination, a remaining time required to reach the destination, a real scene picture, a road condition, or driving route information. The foregoing embodiment specifically describes an operation procedure from a home page interface to an address search page interface to a navigation interface in a map application.

With reference to the second aspect, in a possible implementation, when the target application is a music application, the first display content includes one or more pictures and one or more function controls, the one or more function controls include a playback start control, and the second display content includes playback progress indication information. The first electronic device is further configured to determine, based on the touch parameter of the first touch operation and the second display data, that the first touch operation is an operation for the playback start control.

In a possible implementation, the first electronic device is further configured to send audio data corresponding to the second display content to the second electronic device; and the second electronic device is further configured to play the audio data through a speaker of the second electronic device. The foregoing embodiment specifically describes an operation procedure from a home page interface to a music playback page interface in a music application.

With reference to the second aspect, in a possible implementation, the second electronic device is a vehicle-mounted terminal. The first electronic device may be a mobile phone.

According to a third aspect, this application provides an electronic device, including one or more processors and one or more memories. The one or more memories are separately coupled to the one or more processors; the one or more memories are configured to store computer program code, and the computer program code includes computer instructions; and when the computer instructions are run on the processor, the electronic device is enabled to perform the application access method performed by a first electronic device or a second electronic device in any possible implementation of the first aspect.

According to a fourth aspect, an embodiment of this application provides a computer storage medium, including computer instructions. When the computer instructions are run on an electronic device, a communications apparatus is enabled to perform the application access method in any possible implementation of the first aspect.

According to a fifth aspect, an embodiment of this application provides a computer program product. When the computer program product runs on a computer, the computer is enabled to perform the application access method in any possible implementation of the first aspect.

### BRIEF DESCRIPTION OF DRAWINGS

FIG. 1 is a schematic diagram of a system of an application access method according to an embodiment of this application;
FIG. 2 is a schematic diagram of a structure of an electronic device according to an embodiment of this application;
FIG. 3 is a software architecture diagram of an electronic device according to an embodiment of this application;
FIG. 4A is a method flowchart of an application access method according to an embodiment of this application;
FIG. 4B is a principle flowchart of an application access method according to an embodiment of this application;
FIG. 5 is a schematic diagram of a group of screen sizes according to an embodiment of this application;
FIG. 6A is a flowchart of a map application access principle according to an embodiment of this application;
FIG. 6B is a flowchart of a map application access method according to an embodiment of this application;
FIG. 7 is a schematic diagram of another group of interfaces according to an embodiment of this application;
FIG. 8A to FIG. 8D are schematic diagrams of another group of interfaces according to an embodiment of this application;
FIG. 9 is a schematic diagram of another group of interfaces according to an embodiment of this application;
FIG. 10A and FIG. 10B are schematic diagrams of another group of interfaces according to an embodiment of this application;
FIG. 11 is a schematic diagram of another group of interfaces according to an embodiment of this application;
FIG. 12A and FIG. 12B are schematic diagrams of another group of interfaces according to an embodiment of this application;
FIG. 13 is a flowchart of a music application access principle according to an embodiment of this application;
FIG. 14A and FIG. 14B are schematic diagrams of another group of interfaces according to an embodiment of this application;
FIG. 15A to FIG. 15C are schematic diagrams of another group of interfaces according to an embodiment of this application; and
FIG. 16A to FIG. 16C are schematic diagrams of another group of interfaces according to an embodiment of this application.

### DESCRIPTION OF EMBODIMENTS

The following clearly describes technical solutions in embodiments of this application in detail with reference to the accompanying drawings. In descriptions of embodiments of this application, unless otherwise stated, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

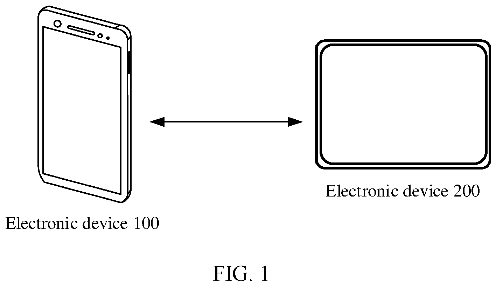

FIG. 1 is an example of a schematic architectural diagram of a system 10 according to this application. The system 10 may include an electronic device 100 and an electronic device 200. The electronic device 100 and the electronic device 200 may communicate with each other in wireless communication manners such as Bluetooth (Bluetooth, BT), near field communication (near field communication, NFC), wireless fidelity (wireless fidelity, Wi-Fi), Wi-Fi direct connection, ZigBee, and account sharing.

The electronic device 100 and the electronic device 200 in the embodiments of this application may be a mobile phone, a tablet computer, a desktop computer, a laptop computer, a handheld computer, a notebook computer, an ultra-mobile personal computer (ultra-mobile personal computer, UMPC), a netbook, and an electronic device having a touchscreen (or a display), such as a cellular phone, a personal digital assistant (personal digital assistant, PDA), an augmented reality (Augmented reality, AR)/virtual reality (virtual reality, VR) device, a vehicle-mounted device, a vehicle-mounted terminal, a watch, or a band. A specific type of the electronic device is not particularly limited in the embodiments of this application.

In some embodiments, for example, the electronic device 100 is a mobile phone, and the electronic device 200 is a vehicle-mounted terminal. A HUAWEI HiCar SDK is integrated into the electronic device 200, and the HUAWEI HiCar SDK supports the electronic device 200 to get access to an ecosystem connection of the HUAWEI HiCar.

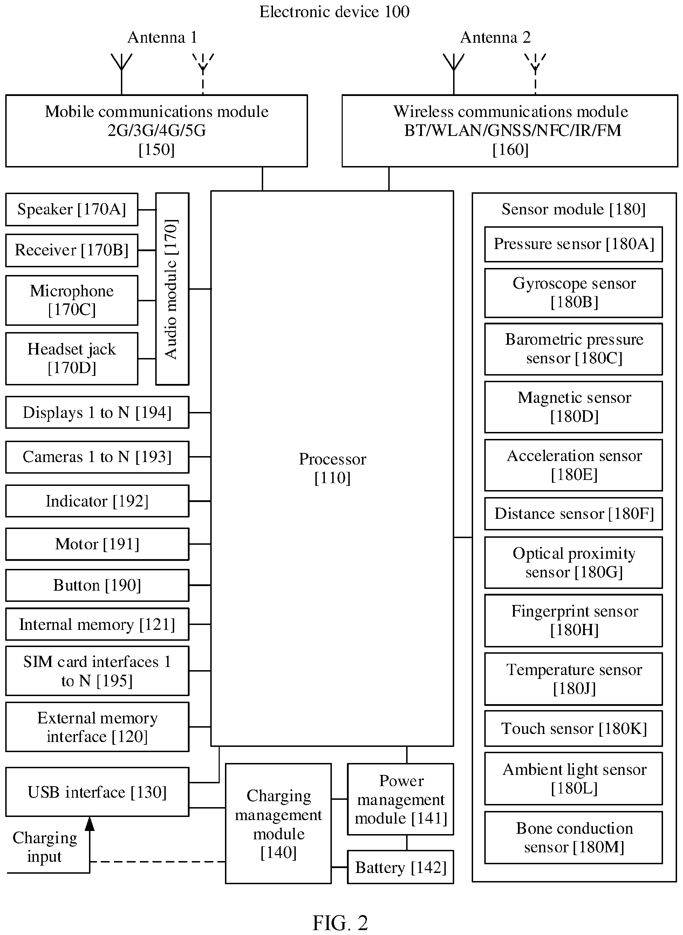

FIG. 2 is an example of a schematic diagram of a structure of the electronic device 100.

The following specifically describes this embodiment by using the electronic device 100 as an example. It should be understood that the electronic device 100 shown in FIG. 2 is merely an example, and the electronic device 100 may have more or fewer components than those shown in FIG. 2, or may have two or more components that are combined, or may have different component configurations. Various components shown in the figure may be implemented by using hardware including one or more signal processing and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, and/or a universal serial bus (universal serial bus, USB) interface, and/or the like.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input by using a wireless charging coil of the terminal 100. While the charging management module 140 is charging the battery 142, power may be further supplied to the terminal by using the power management module 141.

The power management module 141 is configured to connect to the battery 142, the charging management module 140, and the processor 110. The power management module 141 receives an input of the battery 142 and/or the charging management module 140, and supplies power to the processor 110, the internal memory 121, the external memory, the display 194, the camera 193, the wireless communications module 160, and the like. The power management module 141 may be further configured to monitor parameters such as a battery capacity, a battery cycle count, and a battery health status (electric leakage or impedance). In some other embodiments, the power management module 141 may be further disposed in the processor 110. In some other embodiments, the power management module 141 and the charging management module 140 may alternatively be disposed in a same device.

A wireless communication function of the terminal 100 may be implemented by using the antenna 1, the antenna 2, the mobile communications module 150, the wireless communications module 160, the modem processor, the baseband processor, and the like.

The antenna 1 and the antenna 2 are configured to transmit and receive an electromagnetic wave signal. Each antenna in the terminal 100 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communications module 150 may provide a solution, applied to the terminal 100, for wireless communication including 2G, 3G, 4G, 5G, or the like. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering and amplification on the received electromagnetic wave, and transmit the electromagnetic wave to the modem processor for demodulation. The mobile communications module 150 may further amplify a signal modulated by the modem processor, and convert the signal into an electromagnetic wave for radiation through the antenna 1. In some embodiments, at least some functional modules of the mobile communications module 150 may be disposed in the processor 110. In some embodiments, at least some functional modules of the mobile communications module 150 may be disposed in the same device as at least some modules of the processor 110.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in the same device with the mobile communications module 150 or another functional module.

The wireless communications module 160 may provide a wireless communication solution that is applied to the terminal 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communications module 160 may be one or more devices integrating at least one communications processor module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communications module 150 of the terminal 100 are coupled, and the antenna 2 and the wireless communications module 160 are coupled, so that the terminal 100 can communicate with a network and another device by using a wireless communications technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing, and is connected to the display 194 and the application processor. The GPU is configured to perform mathematical and geometric calculation, and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light-emitting diode, AMOLED), a flexible light-emitting diode (flexible light-emitting diode, FLED), a mini LED, a micro LED, a micro OLED, a quantum dot light emitting diode (quantum dot light-emitting diode, QLED), or the like. In some embodiments, the electronic device 100 may include one or N displays 194, and N is a positive integer greater than 1.

The electronic device 100 can implement a photographing function by using the ISP, the camera 193, the video codec, the GPU, the display 194, the application processor, and the like.

The ISP is configured to process data fed back by the camera 193. The camera 193 is configured to capture a static image or a video.

The internal memory 121 may be configured to store computer-executable program codes. The executable program codes include instructions. The processor 110 runs the instructions stored in the internal memory 121 to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and a phone book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to code and decode audio signals. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The receiver 170B, also referred to as an "earpiece", is configured to convert an audio electrical signal into a sound signal. The microphone 170C, also referred to as a "mike" or a "mic", is configured to convert a sound signal into an electrical signal. The headset jack 170D is configured to connect to a wired headset.

The pressure sensor 180A is configured to sense a pressure signal, and can convert the pressure signal into an electrical signal. The gyroscope sensor 180B may be configured to determine a motion posture of the electronic device 100. The magnetic sensor 180D includes a Hall sensor. The acceleration sensor 180E may detect accelerations in various directions (usually on three axes) of the electronic device 100. The optical proximity sensor 180G may include a light-emitting diode (LED) and an optical detector, for example, a photodiode. The ambient light sensor 180L is configured to sense ambient light brightness. The fingerprint sensor 180H is configured to collect a fingerprint. The temperature sensor 180J is configured to detect a temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor 180K. The touch sensor 180K may transfer the detected touch operation to the application processor to determine a type of a touch event. A visual output related to the touch operation may be provided through the display 194. In some other embodiments, the touch sensor 180K may alternatively be disposed on a surface of the electronic device 100 at a location different from a location of the display 194.

The bone conduction sensor 180M may obtain a vibration signal.

The button 190 includes a power button, a volume button, and the like. The button 190 may be a mechanical button, or may be a touch button. The electronic device 100 may receive a button input, and generate a button signal input related to a user setting and function control of the electronic device 100. The motor 191 may generate a vibration prompt. The indicator 192 may be an indicator light, and may be configured to indicate a charging status and a power change, or may be configured to indicate a message, a missed call, a notification, and the like. The SIM card interface 195 is configured to connect to a SIM card.

Currently, there are various automobile screens. If an application vendor wants to develop a vehicle-mounted terminal application, the application vendor needs to develop various UIs to adapt to vehicle-mounted terminal screens of different sizes, resolutions, and shapes. Because there are various vehicle-mounted terminal screens, a workload of developing a vehicle-mounted terminal application is heavy.

Currently, application vendors independently develop respective vehicle-mounted terminal applications. Most of the development time is spent on optimizing application UIs to adapt to various vehicle-mounted terminal screens. Because UI design styles of the application vendors are different, it is difficult to unify UI styles of applications on a same vehicle-mounted terminal, which is also difficult to bring good experience to users. In addition, it is relatively difficult to develop an application on an automobile, which reduces a willingness of the application vendor to develop the vehicle-mounted terminal applications, and is unfavorable to ecosystem construction of the Internet of vehicles.

An application access method in embodiments of this application provides an application template CarKit.aar for application vendors. Based on the application template, the application vendors do not need to pay attention to UIs, and only need to implement an interface declared in CarKit.aar, to develop application software applicable to the electronic device 200, thereby greatly improving development efficiency. Application vendors can complete adaptation development on a target application based on the CarKit.aar. The target application is installed and is run on the electronic device 100. When the electronic device 100 is successfully connected to the electronic device 200, the electronic device 100 obtains a screen size of a display of the electronic device 200. Based on the screen size of the display of the electronic device 200 and display content of the target application, the electronic device 100 draws a display interface adapted to the screen size, and projects the display content of the target application to the display of the electronic device 200 for display. A user can operate the target application on the electronic device 200, to complete access of the target application to the electronic device 200.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100. The Android system is merely a system example of the electronic device 100 in embodiments of this application. This application may be further applicable to another type of operating system, such as iOS, Windows, and HarmonyOS. This is not limited in this application. The following uses only the Android system as an example of the operating system of the electronic device 100.

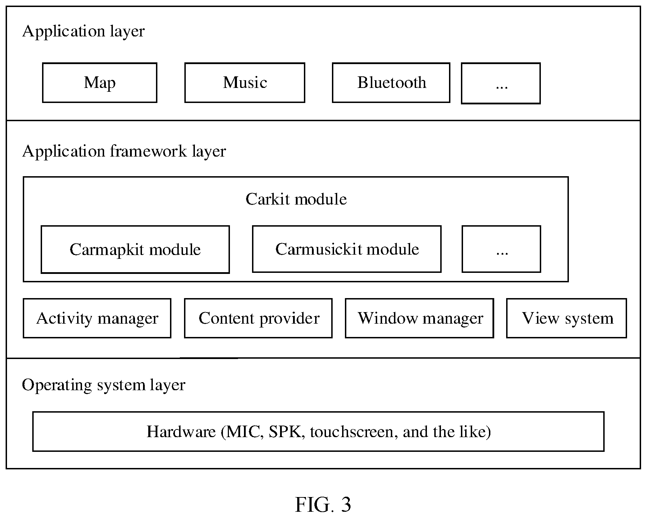

FIG. 3 is a block diagram of a software structure of the electronic device 100 according to an embodiment of this application.

In a layered architecture, software is divided into several layers, and each layer has a clear division of roles and tasks. Layers communicate with each other through a software interface. In some embodiments, the Android system is divided into three layers from top to bottom: an application layer, an application framework layer, and an operating system layer.

The application layer may include a series of application packages.

As shown in FIG. 3, application packages may include applications such as camera, gallery, calendar, phone, maps, navigation, WLAN, Bluetooth, music, videos, game, shopping, travel, and instant messaging (such as messages). In addition, application packages may further include system applications such as a home screen (namely, a desktop), a leftmost screen, a control center, and a notification center.

The application framework layer provides an application programming interface (application programming interface, API) and a programming framework for an application at the application layer. The application framework layer includes some predefined functions.

As shown in FIG. 3, the application framework layer may include an input manager, a window manager (window manager), a content provider, a view system, a phone manager, a resource manager, a notification manager, a display manager, an activity manager (activity manager), and the like. For ease of description, in FIG. 3, an example in which the application framework layer includes a window manager, an activity manager, a content provider, a view system, and a carkit module is used.

The activity manager is configured to manage activities that are running in the system, including a process (process), an application, a service (service), task (task) information, and the like. Generally, each time an application is run, the activity manager correspondingly starts a task stack, and one task stack includes one or more activities. For example, the electronic device 100 runs an application, and starts a task stack of the application. In this case, an activity (activity 1) is activated, is displayed at the front end of the display 194, and is at the top of the task stack (the top of the Activity stack). The activity 1 is in an active state (active/running) in which the activity 1 is visible and can interact with a user. When the electronic device 100 receives a user operation, and a new application interface needs to be displayed, a new activity (activity2) is displayed at the top of the task stack. If the activity2 shows an application interface that is not displayed in full screen or is a transparent application interface, that is, the activity2 does not cover the activity 1 or does not completely cover the activity 1, the activity 1 is in a paused (Paused) state, and the activity 1 still keeps connected to the window manager, remains all data remains, is visible on the display 194, but is no longer able to interact with the user. When the system memory of the electronic device 100 is insufficient, the activity 1 is forcibly killed (killed). If the activity2 completely covers the activity 1, the activity 1 is in a stopped state (Stopped), and the activity1 remains all data, but is invisible on the display 194. When the system memory of the electronic device 100 is insufficient, an activity in a stopped state is killed prior to an activity in a paused state. It should be noted that when an application is closed, all activities in a task stack of the application are also killed.

In embodiments of this application, the electronic device 100 runs a target application, and the target application can be simultaneously displayed on two electronic devices. Users can operate the same application software on the two electronic devices. The target application corresponds to two sets of activity instances. One set may be displayed on the display 194 of the electronic device 100, and the other set may be displayed on the display of the electronic device 200. The two sets of activity instances do not interfere with each other. The target application may obtain a corresponding Context from an Activity of the electronic device 100 or an Activity of the electronic device 200, and use corresponding Contexts on different displays, to obtain loading and access resources of the target application.

The window manager is configured to manage a window program. The window manager may obtain a size of a display, to determine whether there is a status bar, perform screen locking, take a screenshot, and the like. The window manager may be further configured to control appearances and locations of windows, and to provide users with a method for operating these window programs. In this application, the window manager obtains a screen size of the display of the electronic device 200, and determines a size and location of a window displayed on the display of the electronic device 200.

The content provider is configured to store and obtain data, and enable the data to be accessed by an application. The data may include a video, an image, audio, calls that are made and received, a browsing history, a bookmark, an address book, and the like.

The view system includes a visual control, for example, a control for displaying text or a control for displaying an image. The view system may be configured to construct an application. A display interface may include one or more views. For example, a display interface including a notification icon of messages may include a text display view and a picture display view. In this application, the content provider obtains display content provided by an application, and the display content is drawn by the view system on the display of the electronic device 100 and the display of the electronic device 200.

The carkit module provides a corresponding interface for an application at the application layer, and implements, through the interface provided by the carkit module, functions of obtaining display content of the application and controlling a service for the electronic device 200. In embodiments of this application, a map application and a music application are used as examples to respectively provide a carmapkit module and a carmusickit module. The carmapkit module provides a corresponding interface for the map application, and interaction between the map application and the electronic device 200 is implemented through the interface. For example, the electronic device 100 obtains display content of the map application through the interface provided by the carmapkit module, and displays the display content on the display of the electronic device 200. For another example, a user operates the map application on the electronic device 200, and the electronic device 100 initiates execution of a corresponding service to the map application through the interface provided by the carmapkit module. Similarly, the carmusickit module provides a corresponding interface for the music application, and implements interaction between the music application and the electronic device 200 through the interface.

The carkit module is further configured to arrange the obtained display content. The carkit module performs, based on a screen display parameter of the display of the electronic device 200, a layout in a manner such as stretching, zooming, hiding, equalization, wrapping, or extending on the obtained display content (a button, a text, a picture, and the like).

The input manager is configured to receive an instruction or a request reported by the operating system layer.

The display manager is configured to transmit display content to the operating system layer.

The phone manager is configured to provide a communication function of the electronic device 100, for example, management of a call status (including answering, declining, or the like).

The resource manager provides, for an application, various resources such as a localized character string, an icon, a picture, a layout file, and a video file.

The notification manager enables an application to display notification information in a status bar, and may be configured to transmit a notification-type message. The displayed information may automatically disappear after a short pause without user interaction. For example, text information is prompted in the status bar, a prompt tone is produced, the electronic device vibrates, or an indicator light blinks.

The operating system layer provides a hardware management function, and is configured to manage and allocate various resources (a CPU, a memory, an input/output device, a display, a speaker, a microphone, or the like) of the electronic device 100 for an application. For example, when an application needs to run, the operating system transfers the application to the memory, and allocates memory space for the application to run and store data. For another example, when an application needs to display an application interface, the operating system calls a display device (for example, the electronic device 200) to provide, for the application, a service for controlling the display device. In embodiments of this application, the electronic device 100 establishes a connection to the electronic device 200, and an application in the electronic device 100 may use hardware resources of the electronic device 200.

With reference to FIG. 3, the following describes a specific working principle of implementing the application access method by the electronic device 100 in this application.

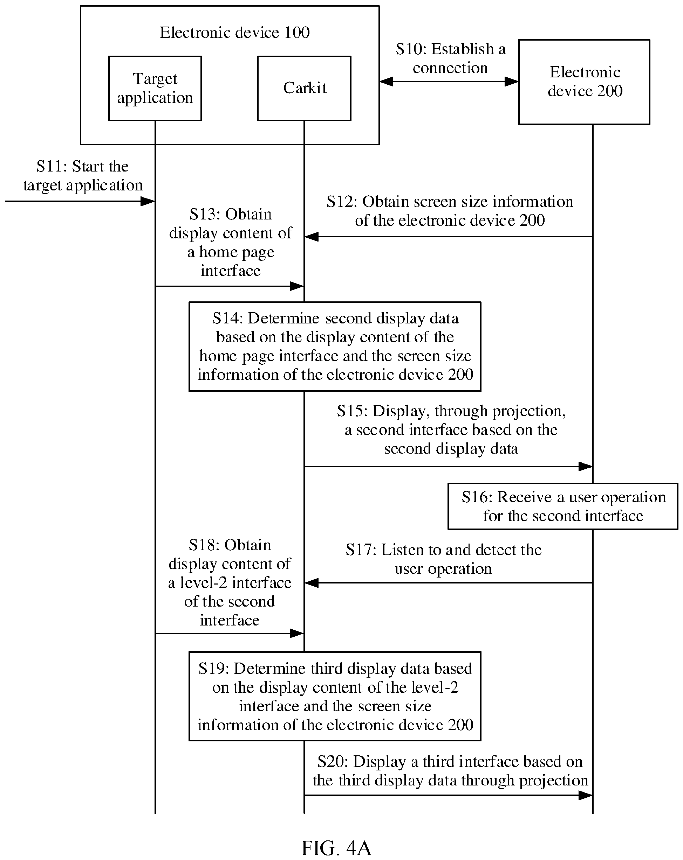

FIG. 4A is a schematic flowchart of an application access method according to an embodiment of this application.

Step S10: The electronic device 100 establishes a connection to the electronic device 200.

The electronic device 100 establishes a connection to the electronic device 200, and may perform communication in a wireless communication manner such as Bluetooth (Bluetooth, BT), near field communication (near field communication, NFC), wireless fidelity (wireless fidelity, Wi-Fi), Wi-Fi direct connection, ZigBee, and account sharing. In this application, the electronic device 100 may be referred to as a first electronic device, and the electronic device 200 may be referred to as a second electronic device.

Step S12 may be performed before step S 10, or may be performed after step S10.

Step S11: The electronic device 100 starts a target application.

A user starts the target application through tapping. The target application may be triggered to start on the electronic device 100, or may be triggered to start on the electronic device 200. When the user triggers to start the target application on the electronic device 100, the electronic device 100 runs the target application. When the user triggers to start the target application on the electronic device 200, the electronic device 200 sends a message to the electronic device 100, to indicate the electronic device 100 to run the target application.

Step S12: A carkit obtains a screen display parameter of the electronic device 200.

Step S12 may be performed after step S11, or may be performed after step S10. The carkit module of the electronic device 100 obtains the screen display parameter of the electronic device 200. The screen display parameter includes an actual screen display length and an actual screen display width of a display of the electronic device 200, namely, a visible screen size. The screen display parameter may further include a parameter such as resolution of the display of the electronic device 200.

Step S13: The carkit obtains display content of a home page interface.

The carkit obtains the display content of the home page interface from the target application. For example, for the map application, the display content of the home page interface includes a base map, a search button, a shortcut address button, or the like; and for the music application, the display content of the home page interface includes a recommended song, a search button, a playback button, or the like. In embodiments of this application, the display content of the home page interface may be referred to as first display content.

Step S14: The carkit determines second display data based on the display content of the home page interface and the screen display parameter of the electronic device 200.

The second display data is display data adapted to the display of the electronic device 200, and an element in the second display data is obtained based on the obtained display content of the home page interface.

Step S15: The electronic device 200 displays a second interface through projection based on the second display data.

The electronic device 100 performs projection to the electronic device 200 to display the second interface, and the display of the electronic device 200 displays the second interface. The second interface is displayed in full screen on the display of the electronic device 200. The user may use the target application by using an application interface displayed by the electronic device 200.

In this embodiment of this application, the electronic device 100 starts the target application, obtains the display content of the home page interface, draws an interface by using the view system, and displays the first interface, namely, the home page interface of the target application, on a display of the electronic device 100.

Because a screen size of the electronic device 100 and a screen size of the electronic device 200 are different, a layout manner of the display interface of the electronic device 100 is also different from that of the display interface of the electronic device 200.

In some embodiments, the electronic device 100 runs the target application in the background, and the target application may still be normally used through the application interface displayed by the electronic device 200.

Step S16: The electronic device 200 receives a user operation for the second interface. Step S17: The carkit listens to and detects the user operation. Step S18: The carkit obtains display content of a level-2 interface of the second interface.

Steps S16 to S18 describe an execution manner in which the electronic device 200 obtains the display content from the target application. The user operation is used to enter the level-2 interface of the second interface. For example, the target application is the map application, and the second interface displayed by the electronic device 200 includes a shortcut address button. When the user taps the shortcut address button, the carkit detects the user operation, and obtains corresponding display content from the map application based on the user operation.

Step S19: The carkit determines second display data based on display content of the level-2 interface and the screen display parameter of the electronic device 200. Step S20: The electronic device 200 displays a third interface through projection based on the third display data.

The third display data is display data adapted to the display of the electronic device 200, and an element in the third display data is obtained based on the obtained display content of the level-2 interface. The electronic device 100 performs projection to the electronic device 200 to display the third interface, and the display of the electronic device 200 displays the third interface.

In some embodiments, if a service process of the target application needs to be controlled, the target application may actively update or switch an application interface. For example, the target application listens to a screen event at the top layer, and if the target application does not receive a user operation for a long time, a current application interface is updated. In this case, the target application sends indication information to the carkit and provides display data, to indicate the carkit to draw a new display interface, and the new display interface is displayed on the display of the electronic device 200 through projection. The CarKit and the target application complete interaction with the user according to the logic of control and reverse control.

The activity mentioned in embodiments of this application is an application component, and is configured to implement interaction between the electronic device 100 and the user. One activity provides an application interface, and the electronic device 100 may make a response based on an event triggered by the user in the application interface. In this application, the electronic device 100 runs the target application, and the electronic device 100 supports the target application to be displayed on both the display of the electronic device 100 and the display of the electronic device 200, so that the user can operate the same application on both the electronic device 100 and the electronic device 200. Because the display of the electronic device 100 and the display of the electronic device 200 have different screen sizes, the electronic device 100 starts two sets of activity instances. One set is started for being displayed on the display of the electronic device 100, and the other set is started for being displayed on the display of the electronic device 200 through projection.

In embodiments of this application, the target application needs to perform isolation processing on the Activity displayed on the electronic device 100 and the Activity displayed on the electronic device 200 (including an Activity used for jumping). In other words, the target application needs to use two completely different sets of Activity instances on a mobile phone and a vehicle-mounted terminal. This means that there are two sets of Contexts inside the target application. The electronic device 100 manages the two sets of Contexts separately, and the target application uses corresponding Contexts on different screens.

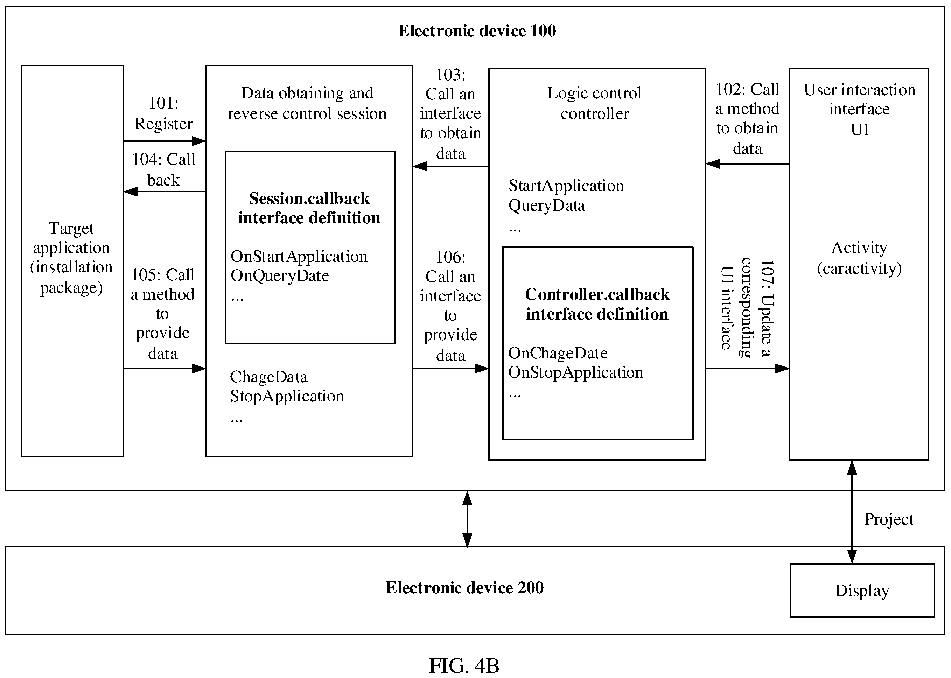

In embodiments of this application, the target application is application software adapted to the application template CarKit. Based on the application template, application vendors do not need to pay attention to a UI, and can make the target application in the electronic device 100 be accessible to the electronic device 200 only by implementing an interface declared in the CarKit.aar. In addition, the UI can adaptively adapt to a screen of the electronic device 200. As shown in FIG. 4B, Session, Controller, and UI are function scopes of the CarKit application template. This application provides a vehicle-mounted terminal application development template CarKit, and the CarKit includes one or more defined Session interfaces and a callable method/function.

The target application integrates the development package into the electronic device 100, and then implements the Session interface. A user interaction interface is carried by an Activity. An interface layout varies with a screen size. Data required by an interface is finally called by an interface in Session. Callback, and the interface is implemented by an application vendor (the target application). If the application vendor needs to change data or status, the application vendor can call the method in the Session to the Controller and then control a service process. If the user needs to change data or status, the Activity detects a user operation triggered by the user, and a display interface changes accordingly. Specific steps are as follows:

101: Perform interface registration.

The target application integrates the CarKit in an Application project, completes the interface defined in Session. Callback when an application is created, and registers with the CarKit. For example, a OnqueryData interface in Session. Callback, as shown in FIG. 4B, is configured to query information or data in the target application.

In some embodiments, step 101 is a step performed in a process of installing the target application, or a step performed when the target application is run for the first time.

102: Call a method to obtain data. 103: Call an interface to obtain data. 104: Perform callback.

Specifically, steps 102 to 104 describe an implementation process in which a user interaction interface obtains the data from the target application. The application interface drawn in the CarKit is displayed on the display of the electronic device 200, and various types of callback of the target application are triggered, so that the data required by the application interface can be obtained to draw the application interface. Callback means that the target application transmits a method or function to the CarKit by using a parameter, so that the CarKit calls the target application by using the method or function.

In this application, the CarKit listens to and detects an event that occurs on the user interaction interface, and calls, based on a method (for example, a method 1) corresponding to the event, a corresponding interface (for example, an interface 1) in Session, callback to obtain required data from the target application. The target application queries the data based on the method (the method 1), and returns a query result through the interface (the interface 1).

For example, when the electronic device 100 starts the target application, an activity corresponding to the home page interface of the target application calls a queryData method in the Controller to call the OnqueryData interface, and obtains interface content of the home page interface from the target application through the OnqueryData interface. The target application obtains, based on the queryData method, the interface content of the home page interface and sends the content to the CarKit through the OnqueryData interface. For another example, in a running process of the target application, an Activity of the target application listens to and detects a data or status change, for example, a user operation that is triggered by the user on the home page interface and that is used to enter a level-2 interface, and calls a method corresponding to the level-2 interface in the Controller to call a corresponding interface, to obtain interface content of the level-2 interface from the target application through the corresponding interface, and then the target application obtains, based on the corresponding method, the interface content of the level-2 interface, and sends the interface content to the CarKit through the corresponding interface.

105: The target application calls a method interface to provide data. 106: Call an interface to provide data. 107: Update a corresponding UI interface.

Specifically, step 105 to step 107 describe an implementation process in which the target application actively updates/switches a current user interaction interface. To control a process of the target application, the target application may call a method in the Controller by using the Session to operate various services. The CarKit and the target application complete interaction with the user according to the logic of control and reverse control.

For example, the target application listens to a screen tap event at the top layer, and may update or switch an application interface by calling an interface provided by the CarMapKit. If no tap operation is performed on a screen for a long time, the current application screen is updated. In this case, the target application calls a changedata method in Session. Callback, as shown in FIG. 4B, and provides interface data that needs to be updated to the CarKit through the onchangedata interface in the Controller.

In some embodiments, the target application supports display on both screens of the electronic device 100 and the electronic device 200, so that the user can operate the same application on both the electronic device 100 and the electronic device 200. For this capability of the target application, the following configuration should be added to an AndroidManifest file of the target application:

```
          <application> ...
                           <meta-data
                           android:name="com.huawei.multidisplay.support.multidisplay"
                           android:value="true" />
          ... </application>
```

In some embodiments, after the electronic device 100 establishes a connection to the electronic device 200, the user usually operates the target application by using the electronic device 200, and the electronic device 100 may enter a screen-off/screen-locked state. In this case, the target application may still be normally used by using the application interface displayed by the electronic device 200.

Optionally, to ensure that the target application can still be normally used in the screen-locked state by using the application interface displayed by the electronic device 200, the target application needs to find an activity used for display on the screen of the electronic device 200, and the following code is added to an onCreate() method:

```
          protected void onCreate(Bundle savedInstanceState) {
                 super.onCreate(savedInstanceState);
                 this.setShowWhenLocked(true);
                  setContentView(R.layout.activity_music); }
```

In embodiments of this application, the electronic device 100 may establish a connection to the electronic device 200 before or after running the target application. The type of the target application may be: a map application, a music application, a news application, a service application (driving care and vehicle service), an entertainment application (video and game), or the like.

FIG. 4B shows a general drawing method and is merely a schematic architectural diagram, and an actual implementation depends on an actual application. For example, a method named queryData in FIG. 4B may be referred to as query Address, queryPath, or the like in a map application. In a music application, the queryData may be a method such as querySongs.

In some embodiments, the CarKit provides a capability of drawing and rendering a UI interface of the target application. The electronic device 100 obtains the screen display parameter of the display of the electronic device 200, and draws, based on the screen display parameter of the display of the electronic device 200 and the obtained interface data of the target application, an application interface displayed on the display of the electronic device 200. The application interface is displayed on the display of the electronic device 200 through projection.

The following describes in detail an application access method provided in this application through an example in which the electronic device 100 is a mobile phone, the electronic device 200 is a vehicle-mounted terminal, and the target application is a map application and a music application.

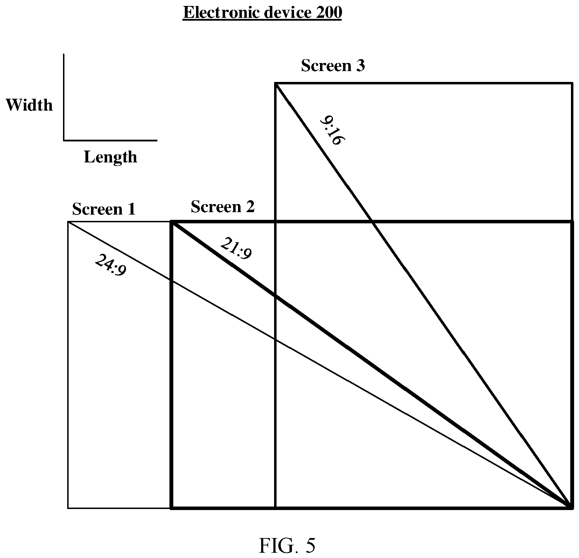

First, several different types of vehicle-mounted terminal screens are described, with several examples below. FIG. 5 shows examples of three vehicle-mounted terminal screens of different sizes, including a screen 1 with an aspect ratio of 24:9, a screen 2 with an aspect ratio of 21:9, and a screen 3 with an aspect ratio of 9:16. Compared with the screen 1, the screen 2, and the screen 3, in embodiments of this application, the screen 1 may also be referred to as a wide screen, the screen 2 may also be referred to as a narrow screen, and the screen 3 may also be referred to as a high screen.

### Embodiment 1: Map application access

A CarMapKit provides one or more functions such as a layout, a container, and a data transmission channel for a map application. Specific data in the layout and container is transmitted by the map application. The map application and the CarMapKit exchange data and perform forward or reverse control through the data transmission channel.

An application vendor integrates the CarMapKit into an installation package of the map application. When the mobile phone starts the map application, the map application starts two sets of activity instances. One set may be referred to as phoneactivity (an activity on the mobile phone), and the other set may be referred to as caractivity (an activity on the vehicle-mounted terminal). The phoneactivity is associated with hardware resources on the mobile phone, and the caractivity is associated with hardware resources on the vehicle-mounted terminal. The CarMapKit corresponds to the caractivity. The CarMapKit divides a map application interface into two layers: a map layer, which is provided by the map application, and an interaction layer, which is provided by the CarMapKit. The map application needs to integrate the two layers into one caractivity and project the two layers to a display of the vehicle-mounted terminal for display.

The map layer is provided by the map application, and the user taps a base map or slides on the base map. Such an event is listened to by the map application. The interaction layer is provided by the CarMapKit. The CarMapKit listens to a tap event of the user, and then can actively jump to a specified interface, or notify the map application to actively jump to a specified interface.

Based on the layered design of the map layer, the map application only needs to focus on map data provision and map navigation service processing, rather than screen resolution adaptation of the vehicle-mounted terminal, car knob joystick adaptation, and the like. In addition, the map application may call an interface provided by the CarMapKit to transmit and control data of the interaction layer.

To draw and manage an interaction layer interface, the CarMapKit provides the following classes for the map application:
Callback class: The CarMapKit uses data provided by the map application to draw an upper-layer interaction layer interface. The map application needs to register the Callback class for the CarMapKit to call.
Controller class: The CarMapKit map application sometimes needs to actively call a service capability of the CarMapKit. The CarMapKit provides a corresponding Controller for the map application to call.
NavigationSessionMgr class: This class is configured to manage the Callback registered by the map application and the Controller provided by the CarMapKit.

When the Application of the map application is initialized, the NavigationSession provided by the CarMapKit needs to be correctly initialized and various Callback interfaces needs to be registered to call back data.

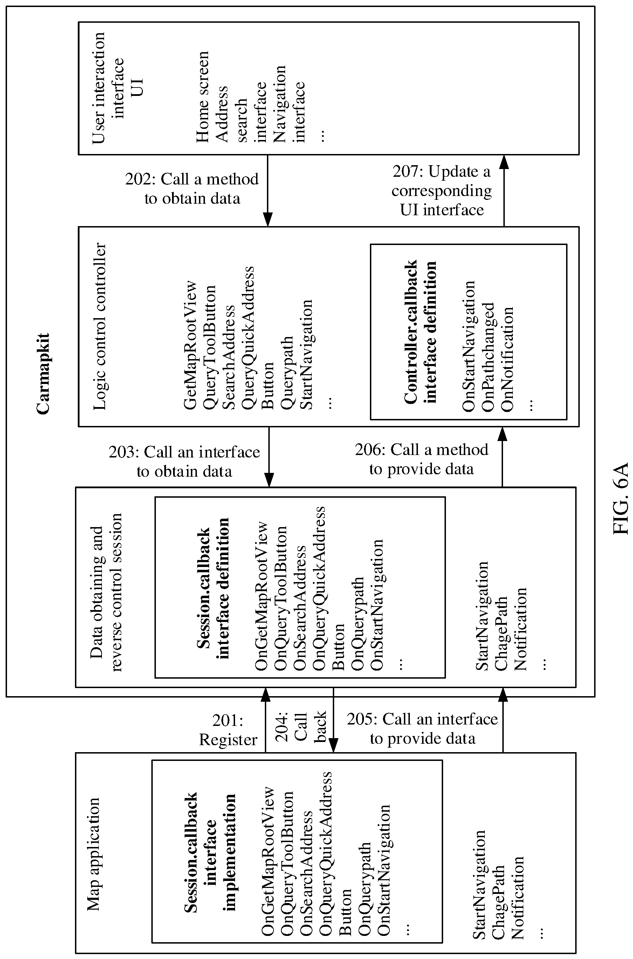

FIG. 6A shows an example of a process of interaction between the map application and the carmapkit.

201: Start the map application, and register an interface.

A user taps to start the map application, where the map application may be triggered to start on the mobile phone, or may be triggered to start on the vehicle-mounted terminal. When the user triggers to start the map application on the mobile phone, the mobile phone runs the map application. When the user triggers to start the map application on the vehicle-mounted terminal, the vehicle-mounted terminal sends a message to the mobile phone to indicate the mobile phone to run the map application.

The map application creates an Application project, introduces the CarMapKit.aar, implements a Session. Callback interface in the CarMapKit, and registers the implementation of Session. Callback with the Session in the onCreate method of the Application. The map application does not need to pay attention to the application interface, and only needs to implement the Session. Callback interface to provide data. If the map application needs to actively control a user interface, an open method in the Session is called.

The map application can implement eight callback interface classes during Application initialization. The classes are as follows:
IAddressCallback: an address-related interface class, where the CarMapKit calls this interface to call back and obtain address-related data, for example, address information such as search addresses and recommended addresses.
ICustomViewCallback: an interface class related to user-defined views.
IHiCarLifeCallback: an interface class related to a HiCar life cycle, where a HiCar of the map application is indicated, through the interface, to start and exit, and the HiCar is a connection mode between the mobile phone and the vehicle-mounted terminal.
INavigationStateCallback: an interface class related to a navigation status, where the CarMapKit queries path information through this interface.
IRouteCallback: an interface class related to route selection.
ISettingCallback: an interface class related to the settings, where after entering a setting state, the CarMapKit obtains full setting information through this interface.
IThemeChangeCallback: a theme-related interface class, where when a theme changes, the map application is notified through this interface, for example, two themes are supported now: black and white.
IToolCallback: a toolbar-related interface class, where the CarMapKit queries information for being displayed on the toolbar on a map through the callback.

The map application needs to implement and register the preceding eight interface classes. Otherwise, the CarMapKit will run abnormally. For example, FIG. 6A shows examples of interfaces such as OnGetMapRootView, OnQueryToolButton, OnSearchAddress, OnQueryQuickAddressButton, OnQuerypath, and OnStartNavigation that are implemented by the map application and registered in the Session. OnGetMapRootView belongs to the address-related interface class and is configured to obtain a map. OnQueryToolButton belongs to the toolbar-related interface class and is configured to obtain buttons or icons to be displayed on the toolbar on a map. OnSearchAddress belongs to the address-related interface class and is configured to search for an address. OnQueryQuickAddressButton belongs to the address-related interface class and is configured to obtain a shortcut address button to be displayed on the map. OnQuerypath belongs to the address-related interface class and is configured to query paths. OnStartNavigation belongs to the interface class related to a navigation status and is configured to enable the navigation status.

A CarActivity layout may be basically divided into three layers: The bottom layer is a base map view, the middle layer is a fragment of the CarMapKit, and the top layer is a top-level UI of the map application based on services of the map application. The base map is at the bottom layer. The UI layer of the CarMapKit is located at the middle layer. The map application may load the fragment of the CarMapKit by using a dynamic loading method of Fragment, where the CarMapKit is displayed in full screen, and the fragment may represent behavior or a user interface part in the caractivity. A multipane UI may be built with a plurality of Fragment combinations in one carActivity, and a specified Fragment may be reused in a plurality of carActivities. A fragment has a life cycle, can receive an input of the fragment, and can be added or deleted during Activity running.

In some embodiments, in an overall framework of the CarMapKit, the UI of the CarMapKit is dynamically loaded by the caractivity in a fragment manner. In this application, the CarActivity is inherited from a FragmentActivity. When the CarMapKit is used, the CarActivity needs to initialize configuration of an Activity to a car mode. The configuration can be initialized in an attachBaseContext method of the Activity. A context needs to be transmitted to an interface for the CarMapKit to obtain a theme. However, in the attachBaseContext method, initialization of the context of the Activity is not completed. Therefore, the context of the application needs to be used in this method.

In this case, resources and interfaces on which the CarMapKit depends are initialized, and then the fragment of the CarMapKit can be dynamically loaded in the CarActivity.

202: Call a method to obtain data. 203: Call an interface to obtain data. 204: Perform callback.

Specifically, step 202 to step 204 describe an implementation process in which a user interaction interface obtains data from the map application, and the map application returns the data through Session, callback. The CarMapKit opens upper-layer client interface elements to the map application in a data model mode. The map application transmits raw data required by the CarMapKit to the CarMapKit in a standard data structure for drawing an upper-layer client GUI. The interface drawn in the CarMapKit is displayed on the display of the electronic device 200. When the user taps an interface of the CarMapKit, the CarMapKit calls a service callback registered by the map application, to notify the map application user of an event that is triggered.

For example, when the map application is just started, getMapRootView and queryToolButton methods in the Controller are called to obtain information such as a base map and a tool list. The two methods call ongetMapRootView and onqueryToolButton interfaces of the map application in Session. Callback to obtain data from the map application. Data obtained from a map home page is loaded into an interface layout and a container, and is completely presented on the display of the electronic device 200 after the home page interface is drawn.

The base map (map layer) of a map is provided by the map application. When a user taps the base map or slides on the base map, the map application listens to such an event. The upper layer of the map interface (interactive layer) is provided by the CarMapKit. The CarMapKit listens to the tap event of the user, and then can actively jump to a specified interface or notify the map application to actively jump to a specified interface.

For example, in a home page interface of a map application, the interaction layer may include elements such as a search box and a shortcut address control. A user taps the search box on the home page interface to enter an address search page interface, and the CarMapKit listens to the tap event. The CarMapKit obtains the interface data required by the address search page from the map application. For example, the searchaddress method in the Controller is used, and the input parameter is null. The map application queries historical search records of the map application based on the parameter.

When the user enters text in the search box, the CarMapKit listens to and detects a text change in the search box and obtains address information in which the text is used as the keyword (destination) from the map application. For example, when the user enters "Huawei area A", the CarMapKit uses the searchaddress method in the Controller. If the input parameter is Huawei area A, the map application finds address information of Huawei area A based on this parameter, and returns the address information to the CarMapKit.

On an address information interface whose address is "Huawei area A", the interaction layer may include elements such as a navigation start control. When the user taps the navigation start control, the CarMapKit listens to and detects a tap event, and the CarMapKit obtains a current location of the electronic device 200 from the map application. "Huawei area A" is navigation information of the destination. The navigation information may include: a distance to a next intersection, a driving direction at the next intersection, a name of a road at the next intersection, a remaining distance to the destination, a driving speed, a time required to reach the destination, a remaining time required to reach the destination, a real scene picture, a road condition, driving route information, or the like.

205: Call an interface to provide data. 206: Call a method to provide data. 207: Update a corresponding UI interface.

Specifically, step 202 to step 204 describe an implementation process of updating/switching a current user interaction interface by the map application. The map application can actively use the Controller provided by the CarMapKit to control an upper-layer client interface. If the map application needs to actively initiate a service process such as navigation, route change, and notification sending, the map application can call an open method in the Session of the CarMapKit to obtain the Controller and then control the map service process.

FIG. 6A shows an example of interfaces, such as OnStartNavigation, OnPathchanged, and OnNotification, registered by the map application in the Controller. OnStartNavigation is configured to enable a navigation status. OnPathchanged is configured to change a path. OnNotification is configured to provide notification information.

For example, when the map application is started, to obtain information such as a base map and a tool list, the getMapRootView and queryToolButton methods in the Controller are called. The two methods call the ongetMapRootView and onqueryToolButton interfaces of the map application in Session. Callback to obtain data from the map application. Data obtained from a map home page is loaded into an interface layout and a container, and is completely presented on the display of the electronic device 200 after the home page interface is drawn.

In some embodiments, there are many address elements in a map service. The CarMapKit provides three address information element encapsulation classes for use by the map application. The following describes the three address element encapsulation classes and their application scopes in sequence.

Basic address element (AddressInfo): a most basic address element, and mainly used for location selection and display of recommended address information, where this type of address has the following information: an address ID that is a globally unique address identifier, an address name that is information about a name of an address, and additional address information that is used to display additional information of an address, such as an abbreviated introduction of the address, a time required to reach the address, and a distance to the address.

Address information with icons (IconAddress): inherited from the AddressInfo and mainly used to display historical address information or found address information on a search page, where compared with that in the AddressInfo, an attribute is added: address icon information that is used to display icons of address elements on the search page.

Map point selection address: inherited from the AddressInfo, and mainly used to display detailed information about a selected location on a point of information (Point of Information, POI) map, where compared with that in the AddressInfo, two attributes are added: third-priority subtext that is used to display third-priority subtext information of the location, and service callback after the third-priority subtext is taped, where the CarMapKit supports a tap operation of the third-priority secondary text, and if the map application supports a tap operation, the corresponding tap callback needs to be set.

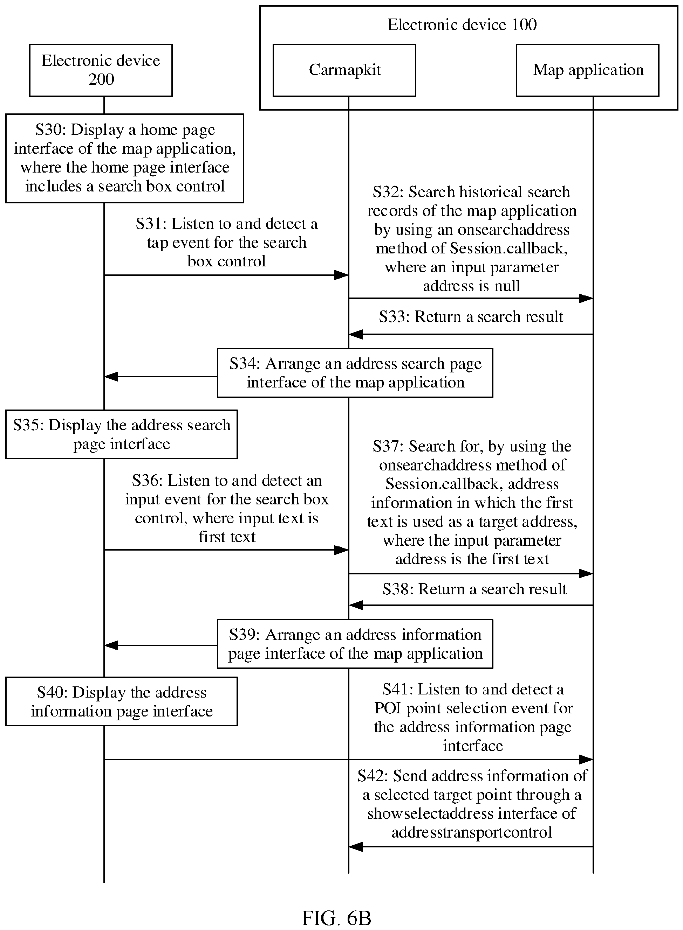

For example, the CarMapKit provides IAddressTransportControl for the map application to use. By using this class, the map application can actively recommend one piece of address information to a user in a navigation idle state, or when a user taps a selected point on the map in a navigation idle state, details information about a user-selected address is displayed for the user. FIG. 6B shows an example of a service interaction process of searching for address information. Specifically, the following steps are included.

Step S30: A display of the electronic device 200 displays a home page interface of a map application, where the home page interface includes a search box control.

The home page interface includes two layers: a map layer (including a base map of the map) and an interaction layer (including one or more controls). The base map of the map is provided by the map application. When a user taps the base map or slides on the base map, such an event is listened to by the map application. The interaction layer is provided by the CarMapKit. The CarMapKit listens to a tap event of the user, and then can actively jump to a specified interface, or notify the map application to actively jump to a specified interface.

In this embodiment of this application, the target application is a map application, and the home page interface, of the map application, displayed on the display of the electronic device 200 may be referred to as a second interface.

Step S31: The carmapkit listens to and detects a tap event for the search box control.

When the user taps the search box control of the home page interface on the display of the electronic device 200, the carmapkit listens to and detects a tap event (a first touch operation) for the search box control.

Step S32: Historical search records of the map application are searched by using an onsearchaddress method of session.callback, where an input parameter address is null.

When the carmapkit listens to and detects the tap event for the search box control, the address search page is displayed. The CarMapKit obtains the page data required by the address search page from the map application by calling the searchaddress method of the Controller and the onsearchaddress interface of session.callback to call the historical search records of the map application, where the input parameter address is null.

Step S33: The map application returns a search result.

The map application performs searching based on the searchaddress method by using a parameter as null. The search result is returned through the onsearchaddress interface of session.callback. The search result is a historical search record of the map application. In this application, the search result may also be referred to as second display content.

Step S34: The carmapkit arranges an address search page interface of the map application. The carmapkit arranges, based on the search result and a screen display parameter of the vehicle-mounted terminal, the address search page interface of the map application, and determines third display data.

Step S35: The display of the electronic device 200 displays the address search page interface. In embodiments of this application, the electronic device 200 displays, based on the third display data, the address search page interface on the display. The address search page interface may be referred to as a third interface.

Step S36: An input event for the search box control is listened to and detected, where input text is first text.

When the user enters text in the search box control on the address search page interface, the carmapkit listens to and detects the input event (a second touch operation) for the search box control, and identifies that the input text is the first text.

Step S37: The onsearchaddress method of Session.callback searches for address information in which the first text is used as a target address, where the input parameter address is the first text.

When the carmapkit listens to and detects the input event for the search box control, the address information page is displayed. The CarMapKit obtains interface data required by the address information page from the map application, and calls the searchaddress method of the Controller and the onsearchaddress interface of session, callback to call historical search records of the map application. The input parameter address is the first text entered by the user or a parameter that can indicate the first text.

Step S38: The map application returns a search result.

Based on the searchaddress method, the map application performs searching with the parameter as the first text, and returns the search result through the onsearchaddress interface of session.callback. The search result is address information in which the first text is used as a first target address in the map application.

Step S39: The carmapkit arranges an address information page interface of the map application. The carmapkit arranges, based on the search result and the screen display parameter of the vehicle-mounted terminal, the address information page interface of the map application, and determines sixth display data.

Step S40: The display of the electronic device 200 displays the address information page interface. In this embodiment of this application, the electronic device 200 displays the address information page interface on the display based on the sixth display data. The address information page interface may be referred to as a sixth interface.

Step S41: A POI point selection event for the address information page interface is listened to and detected.

When the user selects a target point on the base map in the address information page interface, the map application listens to and detects the point selection event for the base map.

Step S42: Address information of a selected address is sent through a showselectaddress interface of addresstransportcontrol.

The map application identifies a target point of the point selection event and sends detailed address information about the user-selected target point through the showselectaddress interface of addresstransportcontrol. The carmapkit arranges the address information page interface of the target point, and the address information page interface of the target point is displayed on the display of the electronic device 200. In this embodiment of this application, the address information page interface of the target point displayed on the display of the electronic device 200 may be referred to as a sixth interface. When the user triggers a navigation start control on the sixth interface, the carmapkit obtains seventh display data from the map application, and displays the navigation interface (a seventh interface) based on the seventh display data.

In some embodiments, the map application listens to a screen tap event (which may be another service logic) at the top layer, and may call an interface provided by the CarMapKit to display and hide information on the interface. For example, in a driving mode, if a screen of a vehicle-mounted terminal does not receive a tap operation within a preset time, the toolbar will be hidden; and the toolbar is displayed when there is a tap event.

The CarMapKit classifies map services into the following six service states: a search state (SEARCH_STATE): used to provide address search and quick address search for users; a navigation idle state (NAVIGATION_IDLE_STATE): used to display a main page of a map when no navigation task is initiated; an address selection state (ADDRESS_SELECT_STATE): used to display a series of addresses for users to select; a navigation route selection state (ROUTE_SELECT_STATE): used to display through navigation optional routes to a destination selected by a user; a navigation ongoing state (NAVIGATION_ONGOING_STATE): used to display real-time navigation information of a current user, including guidance cards and various customized views; and a setting state (NAVIGATION_SETTING_STATE): used to display a list of settings supported by the map application.

In some embodiments, the CarMapKit requires that the map application needs to implement the INavigationStateCallback interface and register a service callback with NavigationCallback. Through this callback, the CarMapKit can notify the map application of a service status change.

In some embodiments, the CarMapKit may be configured to draw and render a map application interface. Data required by the CarMapKit is requested from the map application through a registered Callback class. The map application can also control a service process of the CarMapKit through a Controller class.

In some embodiments, in addition to rendering a map application interface, the CarMapKit may further receive and identify voice instructions. When a user speaks out a text element on the map interface, a corresponding button can be triggered. For example, there is a search button on the map home page. When a user wakes up the voice and says "search", a search button on the map is equivalent to being taped, and then an address search page is automatically displayed. Optionally, the map application needs to listen to the onKeyDown method of the Activity, and then send this event to the CarMapKit for processing. The onKeyDown method may be understood as a method that is used to detect an event in which a mobile phone keyboard is pressed down.

The following shows examples of display forms of a map application on application interfaces of the electronic device 100 and the electronic device 200. To ensure that the application interface can be correctly displayed on screens of different screen sizes and proportions, an interface layout mode needs to support an adaptive capability. The layout adaptation method is mainly used for the adaptive layout capability of a same application interface under different screen sizes, including stretching, zooming, hiding, equalization, proportioning, wrapping, and extending. The stretching and the zooming mean that elements in an interface are stretched and zoomed proportionally according to a horizontal and vertical proportion relationship of a display interface. The hiding means that when elements in an interface are horizontally laid out and a distance between elements is fixed, a quantity of elements that can be displayed can change with a display width. The equalization means that a spacing between elements in an interface is evenly divided according to a quantity of elements. The proportioning means that elements in an interface always occupy a specified proportion in the display interface. The wrapping means a location relationship between two elements, and according to widths of the two elements, the two elements are selected to be of a left-right layout or a top-bottom layout. The extending means that a quantity of elements on the interface is displayed based on the actual situation, and if the elements are not completely displayed, more elements can be displayed through scrolling. It may be understood that the foregoing layout adaptation method is merely an example, and a layout adaptation method of an application interface is not limited in this application.

The following takes a home page interface, an address search page interface, and a navigation page interface of a map application as examples to respectively describe display forms on different screens.

### 1. Home page interface

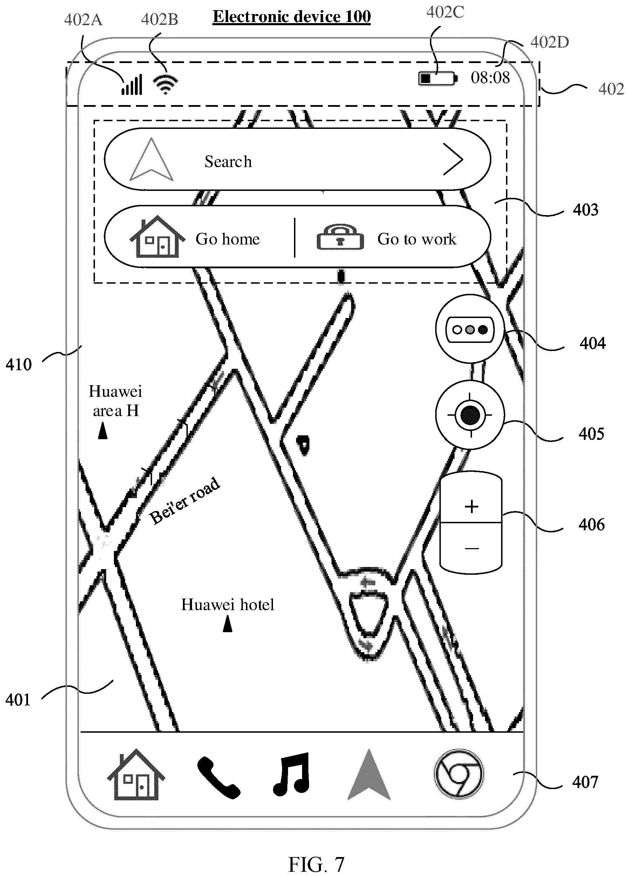

FIG. 7 shows an example of a home page interface 410 of a map application in the electronic device 100. The home page interface 410 may include a map 401, a status bar 402, an address bar 403, controls 404 to 406, and a toolbar 407.

The status bar 402 may include one or more signal strength indicators 402A of a mobile communication signal (also referred to as a cellular signal), one or more signal strength indicators 402B of a wireless fidelity (wireless fidelity, Wi-Fi) signal, a battery status indicator 402C, and a time indicator 402D.

The address bar 403 includes a search box, and two shortcut addresses (home address and office address). The search box may be configured to receive a destination name entered by a user. The shortcut address "Go to home" is associated with an address preset by the user. When the electronic device 100 receives a user operation for "Go to home", the electronic device 100 provides corresponding address information. The shortcut address "Go to work" is associated with an address preset by the user. When the electronic device 100 receives a user operation for "Go to work", the electronic device 100 provides corresponding address information.

The control 404 provides a selection function for voice packages. The control 405 is configured to obtain a current location of the electronic device 100 on the map 534. The control 406 is configured to scale a size of the map 401.

The toolbar 407 includes one or more function controls, and provides functions such as making a call and playing music.

In this embodiment of this application, the electronic device 100 may further obtain a screen display parameter of the electronic device 200, and then determine a location of each control or module through calculation.

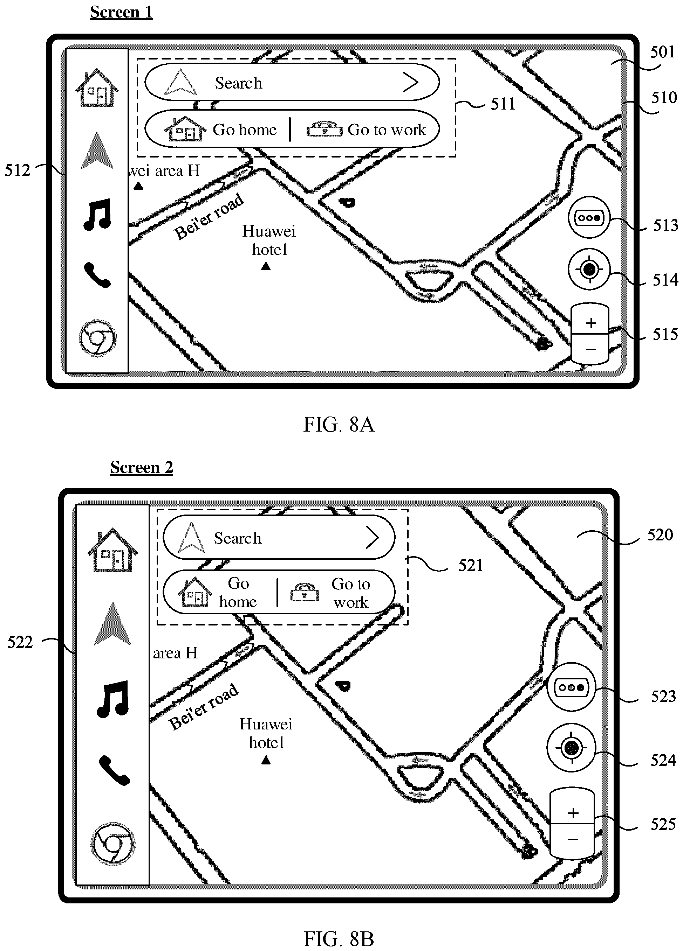

FIG. 8A to FIG. 8C show examples of display effect diagrams of a home page interface of a map application on screens of different sizes. Although display forms of the home page interfaces are different, data required by the home page interfaces is the same, and a same interface of the Session is called.

FIG. 8A to FIG. 8C show examples of a home page interface of a map application on the electronic device 200. When the display of the electronic device 200 is a screen 1, FIG. 8A shows an example of a home page interface 510 of the map application in the electronic device 200. The home page interface 510 may include a map 501, an address bar 511, controls 513 to 515, and a toolbar 512. For descriptions of the map 501, the address bar 511, the controls 513 to 515, and the toolbar 512, refer to related descriptions of the map 401, the address bar 403, the controls 404 to 406, and the toolbar 407 in FIG. 7.

It can be learned that display content of the home page interface 410 of the electronic device 100 and that of the home page interface 510 of the electronic device 200 are roughly the same, but display forms are different. For example, the toolbar 512 is displayed on the left of the map 501, and the toolbar 407 is displayed on the bottom of the map 401.

When the display of the electronic device 200 is a screen 2, FIG. 8B shows an example of a home page interface 520 of the map application in the electronic device 200. The home page interface 520 may include a map 502, an address bar 521, controls 523 to 525, and a toolbar 522. For descriptions of the map 502, the address bar 521, the controls 523 to 525, and the toolbar 522, refer to related descriptions of the map 401, the address bar 403, the controls 404 to 406, and the toolbar 407 in FIG. 7.

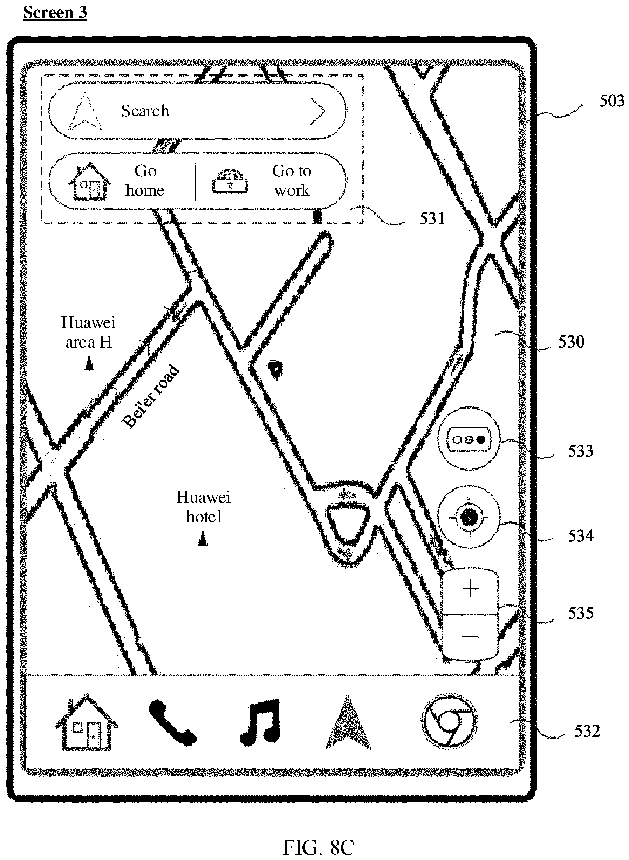

When the display of the electronic device 200 is a screen 3, FIG. 8C shows an example of a home page interface 530 of the map application in the electronic device 200. The home page interface 530 may include a map 503, an address bar 531, controls 533 to 535, and a toolbar 532. For descriptions of the map 503, the address bar 531, the controls 533 to 535, and the toolbar 532, refer to related descriptions of the map 401, the address bar 403, the controls 404 to 406, and the toolbar 407 in FIG. 7.

In conclusion, it can be learned that, for different screens (the screen 1, the screen 2, and the screen 3), display content of the home page interface 510, the home page interface 520, and the home page interface 530 is basically the same, but display forms are different. For example, in a wide screen (screen 1) and a narrow screen (screen 2), display widths of the address bar 511 and the address bar 521 are different. In some embodiments, a display width of the address bar is related to or proportional to a width of a screen. For another example, in a wide screen (screen 1) and a high screen (screen 3), display locations of the toolbar 512 are different. In some embodiments, the toolbar 512 is displayed on the left of the map 401, and the toolbar 532 is displayed on the bottom of the map 503. In some embodiments, display forms (display locations, display sizes, and the like) of the toolbar 512, the toolbar 522, and the toolbar 532, may alternatively be determined in another manner.

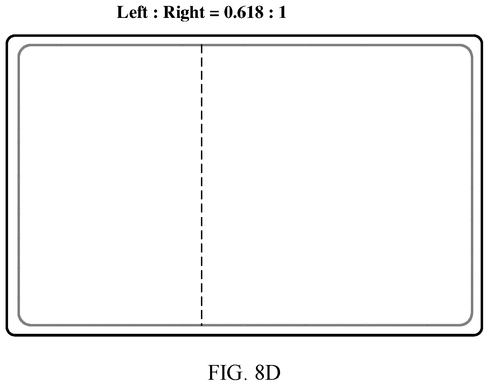

In some embodiments, a style of a home page interface is specified as follows. A display is divided by a golden section ratio. If a control or module is displayed on the left of the display, a width of the control or module on the left does not exceed a divided left area. Optionally, the width of the control or module on the left varies according to an actual width of the screen. As shown in FIG. 8D, the display is divided into a left area and a right area by a golden ratio (0.618: 1), and the control displayed in the left area can only stay in the left area. Optionally, the right side is the same, and details are not described herein again.

### 2. Address search page interface

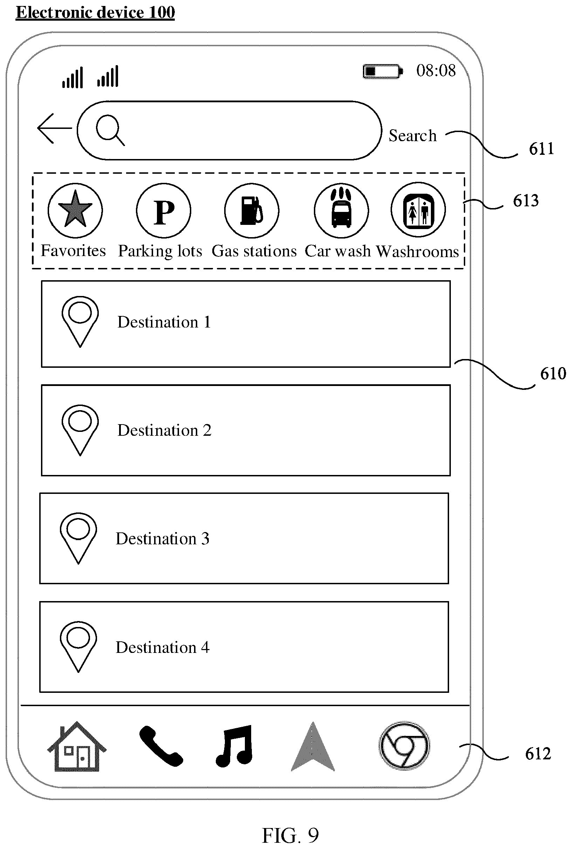

FIG. 9 shows an example of an address search page interface 610 of a map application in the electronic device 100. The address search page interface 610 may include a search bar 611, a shortcut control bar 613, a toolbar 612, and a list including one or more addresses.

The search bar 611 may receive a destination name entered by a user in the search bar 611, and receive an input operation of the user for a search control.

The shortcut control bar 613 provides one or more shortcut controls, and each shortcut control corresponds to one or more addresses, for example, may correspond to an address that is collected by the user, an address that indicates going to a parking lot, an address that indicates going to a gas station, and the like.

The toolbar 612 includes one or more function controls, and provides functions such as making a call and playing music.

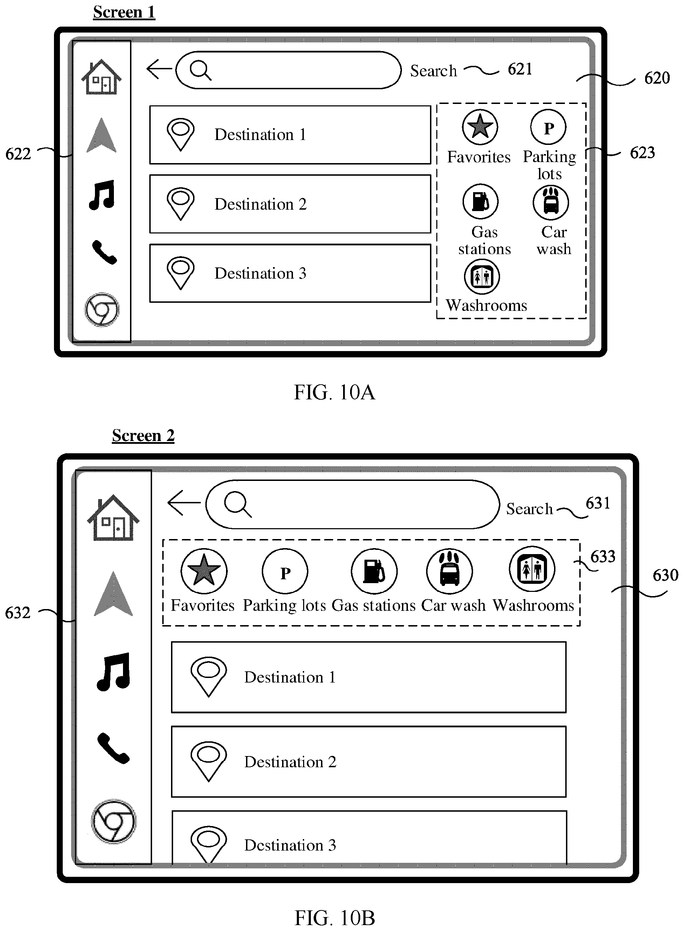

In this embodiment of this application, the electronic device 100 may further obtain a screen display parameter of the electronic device 200, and then determine a location of each control or module through calculation. FIG. 10A and FIG. 10B are examples of display effect diagrams of an address search page interface of a map application on screens of different sizes. Although display forms of the address search page interfaces are different, data required by the address search page interfaces is the same, and a same interface of the Session is called.

FIG. 10A and FIG. 10B show examples of an address search page interface of a map application in the electronic device 200. When the display of the electronic device 200 is a screen 1, FIG. 10A shows an example of an address search page interface 620 of the map application in the electronic device 200. The address search page interface 620 may include a search bar 621, a shortcut control bar 623, a toolbar 622, and a list including one or more addresses. For descriptions of the search bar 621, the shortcut control bar 623, and the toolbar 622, refer to related descriptions of the search bar 611, the shortcut control bar 613, and the toolbar 612 in FIG. 9.

When the display of the electronic device 200 is a screen 2, FIG. 10B shows an example of an address search page interface 630 of the map application in the electronic device 200. The address search page interface 630 may include a search bar 631, a shortcut control bar 633, a toolbar 632, and a list including one or more addresses. For descriptions of the search bar 631, the shortcut control bar 633, and the toolbar 632, refer to related descriptions of the search bar 611, the shortcut control bar 613, and the toolbar 612 in FIG. 9.

In conclusion, it can be learned that, for different screens (the screen 1 and the screen 2), display content of the address search page interface 620 and that of the address search page interface 630 are roughly the same, but display forms are different. For example, in a wide screen (screen 1) and a narrow screen (screen 2), display locations of the shortcut control bar 623 and the shortcut control bar 633 are different. In some embodiments, the shortcut control bar 623 is displayed on the right of the list including one or more addresses, or the shortcut control bar 633 is displayed below the search bar 631 and above the list including one or more addresses. In some embodiments, display forms (display locations, display sizes, and the like) of the toolbar 622 and the toolbar 632 may alternatively be determined in another manner.

In some embodiments, the address search page interface may be classified into a top-bottom layout and a left-right layout. When a ratio of screen width to height is greater than 21:9 and a width of the shortcut bar on the right (accounting for one-third of the total width) is greater than 380 dp, the left-right layout is used, for example, in the screen 1. In other cases, the top-bottom layout is used, for example, in the screen 2. According to this rule, when the interface is displayed, the CarKit can calculate a layout to be used. Specific data required by the interface is obtained from the Session. Callback implementation method of the map application.

### 3. Navigation page interface

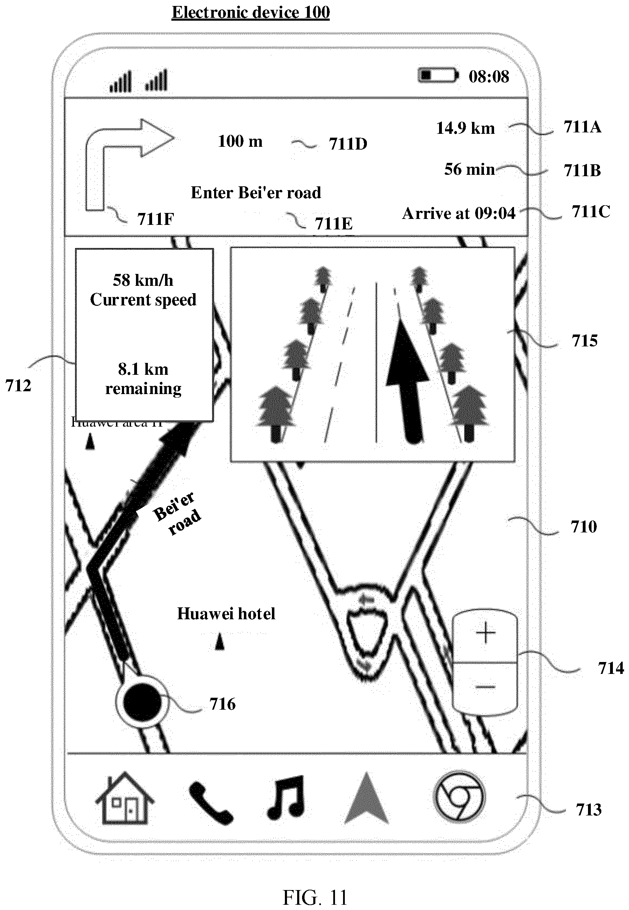

FIG. 11 shows an example of a navigation page interface 710 of a map application in the electronic device 100. The navigation page interface 710 may include navigation information 71 1Ato 711F, a navigation window 712, a toolbar 713, a control 714, a real scene picture 715, and a location mark 716.

The navigation information may include a driving direction 711F (for example, turning right) to a next intersection, a distance 711D (for example, 100 m) to the next intersection, a name of a road 711E (for example, "Bei'er road") at the next intersection, a distance 711A (for example, "14.9 km") to a destination, a time 711B (for example, "56 min") to the destination, and an estimated arrival time 711C (for example, "Arrive at 09:04") to the destination. The navigation window 712 may include a current speed of the electronic device 100 and a remaining distance to the destination (for example "58 km/h" and "8.1 km remaining").

The toolbar 713 includes one or more function controls, and provides functions such as making a call and playing music.

The control 714 is configured to scale a size of a map 401.

A real scene picture of a current road in the map is shown in the real scene picture 715. Optionally, display content in the real scene picture 715 is an image captured by a camera of the electronic device 100.

The location mark 716 may be configured to indicate a current location of the electronic device 100 on the map.

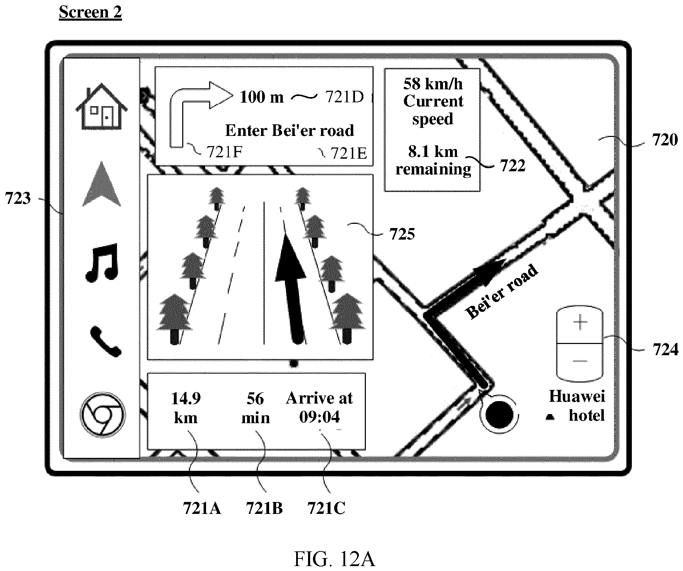

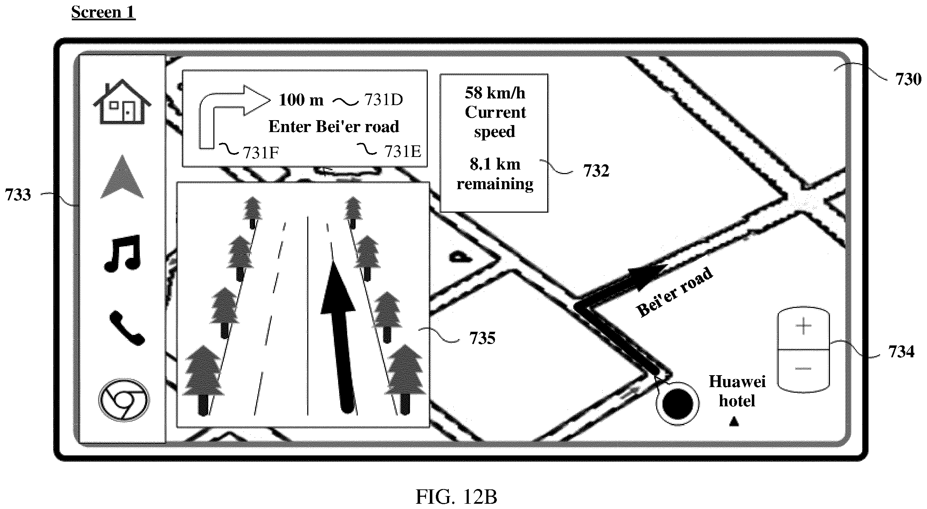

In this embodiment of this application, the electronic device 100 may further obtain a screen display parameter of the electronic device 200, and then determine a location of each control or module through calculation. FIG. 12A and FIG. 12B show examples of display effect diagrams of a navigation page interface of a map application on screens of different sizes. Although display forms of the navigation page interfaces are different, data required by the navigation page interfaces is the same, and a same interface of the Session is called.

FIG. 12A and FIG. 12B show examples of a navigation page interface of a map application in the electronic device 200. When the display of the electronic device 200 is a screen 2, FIG. 10A shows an example of a navigation page interface 720 of the map application in the electronic device 200. The navigation page interface 720 may include navigation information 721A to 721F, a navigation window 722, a toolbar 723, a control 724, and a real scene picture 725. For descriptions of the navigation information 721A to 721F, the navigation window 722, the toolbar 723, the control 724, and the real scene picture 725, refer to related descriptions of the navigation information 711A to 711F, the navigation window 712, the toolbar 713, the control 714 and the real scene picture 715 in FIG. 11.

When the display of the electronic device 200 is a screen 1, FIG. 10B shows an example of a navigation page interface 730 of the map application in the electronic device 200. The navigation page interface 730 may include navigation information 731A to 731F, a navigation window 732, a toolbar 733, a control 734, and a real scene picture 735. For descriptions of the navigation information 731A to 731F, the navigation window 732, the toolbar 733, the control 734, and the real scene picture 735, refer to related descriptions of the navigation information 721Ato 721F, the navigation window 722, the toolbar 723, the control 724 and the real scene picture 725 in FIG. 11. In some embodiments, display forms (display locations, display sizes, and the like) of the toolbar 723, the toolbar 733, and the toolbar 743, may alternatively be determined in another manner.

In conclusion, it can be learned that, for different screens (screen 1 and screen 2), display content of the navigation page interface 720 and that of the navigation page interface 730 are roughly the same, but display forms are different. For example, in a narrow screen (screen 2), navigation information 721A to 721C is displayed below the real scene picture 725, and in a wide screen (screen 1), navigation information 721Ato 721C is hidden.
In embodiments of this application, for the foregoing three interfaces, when a screen is too small, if a size of the control remains unchanged, display may be abnormal. Therefore, this effect is ensured by a general rule. Optionally, a minimum width and a minimum height are set. When a screen width is greater than the set value, controls included in the interface are zoomed out as a whole, so that all screens can be used.

### Embodiment 2: Music application access

A CarmusicKit provides one or more of a layout, a container, and a data transmission channel. Specific data in the layout and the container is transmitted by a music application. The map application and CarmusicKit exchange data and perform forward or reverse control through the data transmission channel.

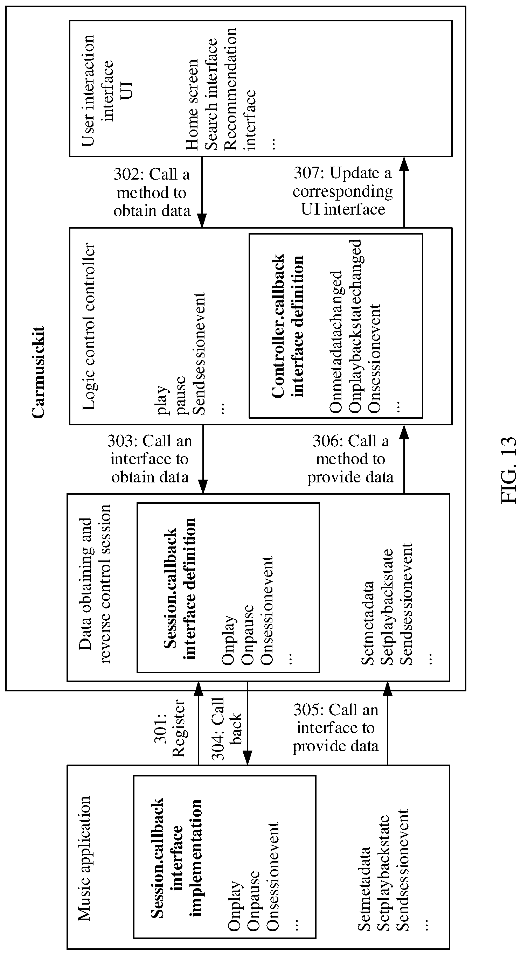

An application vendor integrates the CarmusicKit in an installation package of the music application. After the music application is started, the application calls a method in the Session to provide data for an interface. For example, the setMetaData method shown in FIG. 13 is called to provide song data, the setPlayBackState method is called to provide a playback status, and an interface style customized by the music application is placed into the setExtra. A music interface in the CarmusicKit fills an interface by using data provided by the music application. After a user taps an interface button, this tap operation passes through the Controller and the Session, and finally calls the specific implementation of the music application Session, callback. For example, if the user taps a playback button on the interface, the background sends instructions such as play. In this case, an onPlay listening interface of the music application receives a play event, refreshes the playback status, and provides new data for an interface of the CarmusicKit by using the setMetaData method. The interface is also refreshed accordingly.

FIG. 13 shows an example of a process of interaction between the music application and the carmusickit.

301: Start the music application, and register an interface.

FIG. 13 shows examples of interfaces such as Onplay, Onpause, and Onsessionevent, that are registered by the map application in the Session. The Onplay interface is configured to play music. The Onpause interface is configured to pause music playback. The Onsessionevent interface is configured to listen to a session activity.

302: Call a method to obtain data. 303: Call an interface to obtain data. 304: Perform callback.

Specifically, step 302 to step 304 describe an implementation process in which a user interaction interface obtains data from the music application, and the music application returns the data through Session, callback. The CarmusicKit opens upper-layer client interface elements to the music application in a data model mode. The music application transmits raw data required by the CarmusicKit to the CarmusicKit in a standard data structure for drawing an upper-layer client GUI. The interface drawn in the CarmusicKit is displayed on the display of the electronic device 200. When the user taps an interface of the CarmusicKit, the CarmusicKit calls a service callback registered by the music application, to notify the music application user of an event that is triggered.

For example, in a running process of the music application, the user taps a music playback button on a home page interface, the electronic device 100 detects a tap event, and the CarmusicKit obtains, from the music application, interface data required by the music playback interface, for example, by using a play method in the Controller. This method calls an onplay interface to obtain the music playback interface data from the map application. After obtaining the data, the CarmusicKit loads the data into an interface layout and the container, and after drawing is completed, the data is completely presented on the display of the electronic device 200.

305: Call an interface to provide data. 306: Call a method to provide data. 307: Update a corresponding UI interface.

Specifically, step 305 to step 307 describe an implementation process in which the map application actively updates/switches a current user interaction interface. The music application can actively use a Controller provided by the CarmusicKit to control an upper-layer client interface. If the music application needs to actively initiate a service process such as playback, pausing, and updating, the music application can call an open method in the Session of the CarmusicKit to obtain the Controller and then control the music service process.

FIG. 13 shows an example of interfaces, such as Onmetadatachanged, Onplaybackstatechanged, and Onsessionevent, that are registered by the music application in the Controller. Onmetadatachanged is configured to modify metadata. Onplaybackstatechanged is configured to change a playback status. Onsessionevent is configured to listen to a session activity.

It may be understood that, for a principle of an implementation procedure of the CarmusicKit, refer to the implementation principle of the CarmapKit in Embodiment 1.

The following shows examples of display forms of a music application on application interfaces of the electronic device 100 and the electronic device 200.

### 1. Content page interface

In a content page interface, an internal control adapts to a style selected by different screens and music applications. For example, the control automatically wraps icon text horizontally and vertically according to a quantity of different controls and a screen width. A quantity of songs/playlists displayed on the content page is determined by a customized algorithm. The width of each item is set to 160 dp, and an interval is fixed to 32 dp. When the last item cannot be placed, a quantity of columns is equal to a quantity of item columns. The remaining items are then divided equally at 32 dp to obtain a width of each item.

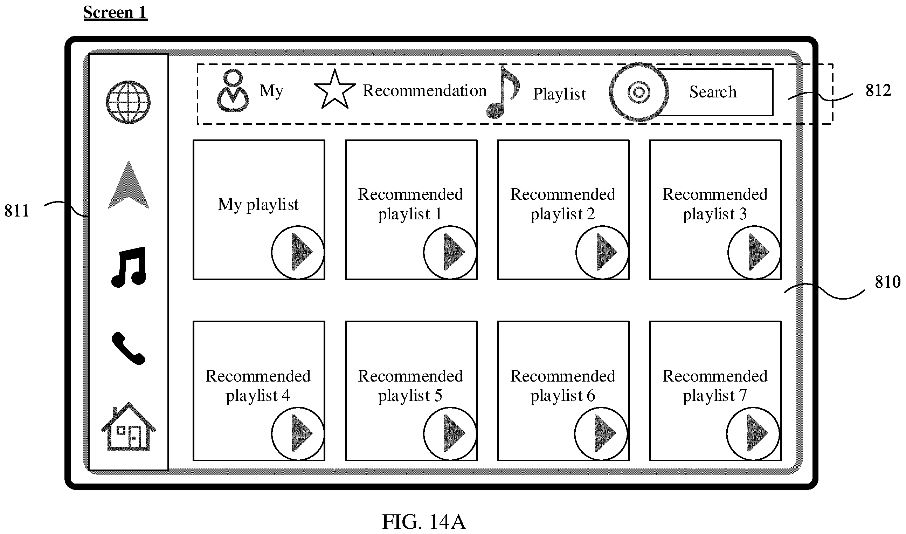

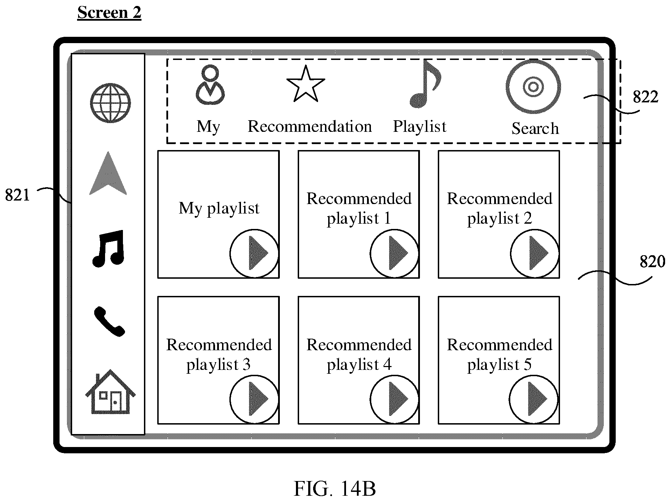

FIG. 14A and FIG. 14B show examples of display forms of the content page interface of the music application on different screens. When the display of the electronic device 200 is a screen 1, FIG. 14A shows an example of a content page interface 810 of the music application in the electronic device 200. The content page interface 810 may include a toolbar 811, a control bar 812, and eight content lists (My playlist and recommended playlists 1 to 7). The toolbar 811 includes one or more function controls, and provides functions such as making a call and playing music. The control bar 822 includes one or more controls, and each control includes two elements, which are respectively an icon element and a text element (for example, "My").

When the display of the electronic device 200 is a screen 2, FIG. 14B shows an example of a content page interface 820 of the music application in the electronic device 200. The content page interface 820 may include a toolbar 821, a control bar 822, and six content lists (My playlist and recommended playlists 1 to 5). For descriptions of the toolbar 821, the control bar 822, and the six content lists, refer to related descriptions of the toolbar 811, the control bar 812, and the eight content lists in FIG. 14A.

It can be learned that, for different screens (screen 1 and screen 2), display content of the content page interface 810 and that of the content page interface 820 are roughly the same, but display forms are different. For example, in a wide screen (screen 1), two elements (an icon element and a text element) of a control in the control bar 812 are arranged in a left-right layout, that is, the icon element is displayed on the left of the text element. In a narrow screen (screen 2), two elements (an icon element and a text element) of a control in the control bar 822 are arranged in a top-bottom layout, that is, the icon element is displayed above the text element. For another example, because a display interface of the screen 1 is greater than a display interface of the screen 2, there are eight content lists on the screen 1, and there are six content lists on the screen 2. In some embodiments, display forms (display locations, display sizes, and the like) of the toolbar 811 and the toolbar 821 may alternatively be determined in another manner.

### 2. Level-2 details page interface

A list in a level-2 details page interface adopts a listpattern control of the uikit and may have a plurality of styles. A specific style is automatically used based on application settings or input data.

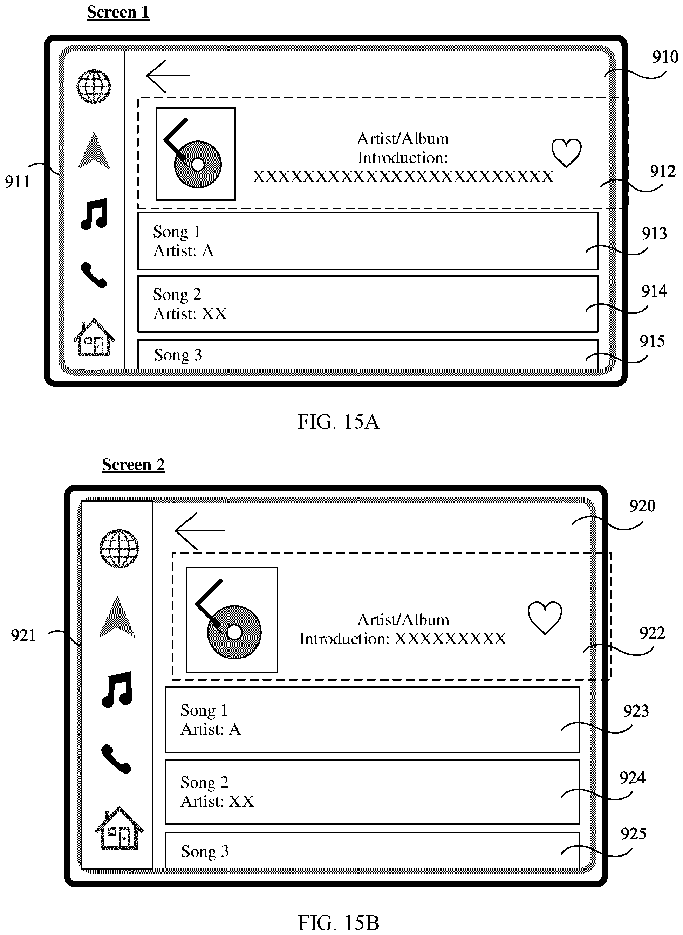

FIG. 15A to FIG. 15C show examples of display forms of a level-2 details page interface of the music application on different screens. When the display of the electronic device 200 is a screen 1, FIG. 15A shows an example of a level-2 details page interface 910 of the map application in the electronic device 200. The level-2 details page interface 910 may include a toolbar 911, a song information area 912, and three playlists (playlists 913 to 915).

When the display of the electronic device 200 is a screen 2, FIG. 15B shows an example of a level-2 details page interface 920 of the map application in the electronic device 200. The level-2 details page interface 920 may include: a toolbar 921, a song information area 922, and three playlists (playlists 923 to 925).

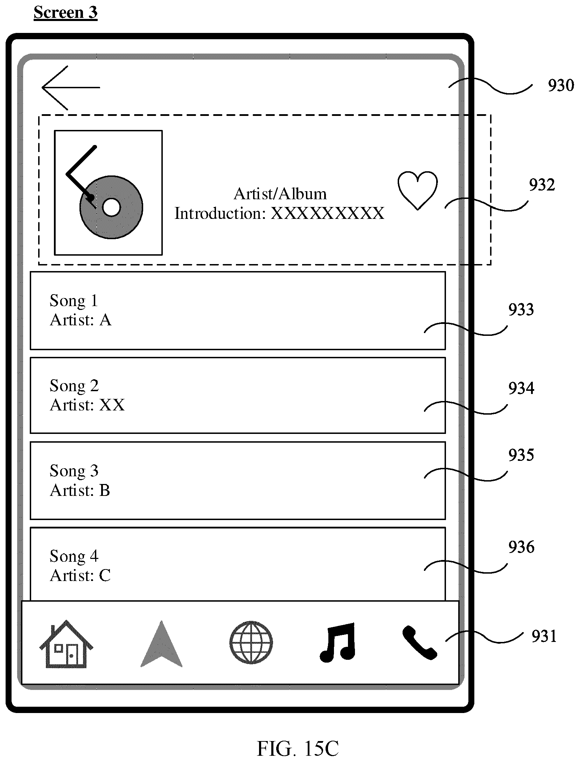

When the display of the electronic device 200 is a screen 3, FIG. 15C shows an example of a level-2 details page interface 930 of the map application in the electronic device 200. The level-2 details page interface 930 may include: a toolbar 931, a song information area 932, and four playlists (playlists 933 to 936).

It can be learned that, for different screens (screen 1, screen 2, and screen 3), display content of the level-2 details page interface 910, the level-2 details page interface 920, and the level-2 details page interface 930 is roughly the same, but display forms are different. For example, widths of the song information area 922 and the three playlists (playlists 923 to 925) in a wide screen (screen 1) are greater than widths of the song information area 922 and the three playlists (playlists 923 to 925) in a narrow screen (screen 2). In some embodiments, display forms (display locations, display sizes, and the like) of the toolbar 911, the toolbar 921, and the toolbar 931, may alternatively be determined in another manner.

### 3. Playback page interface

In a playback page, different layouts may be automatically selected and used based on aspect ratios of different screens, to be compatible with different screens.

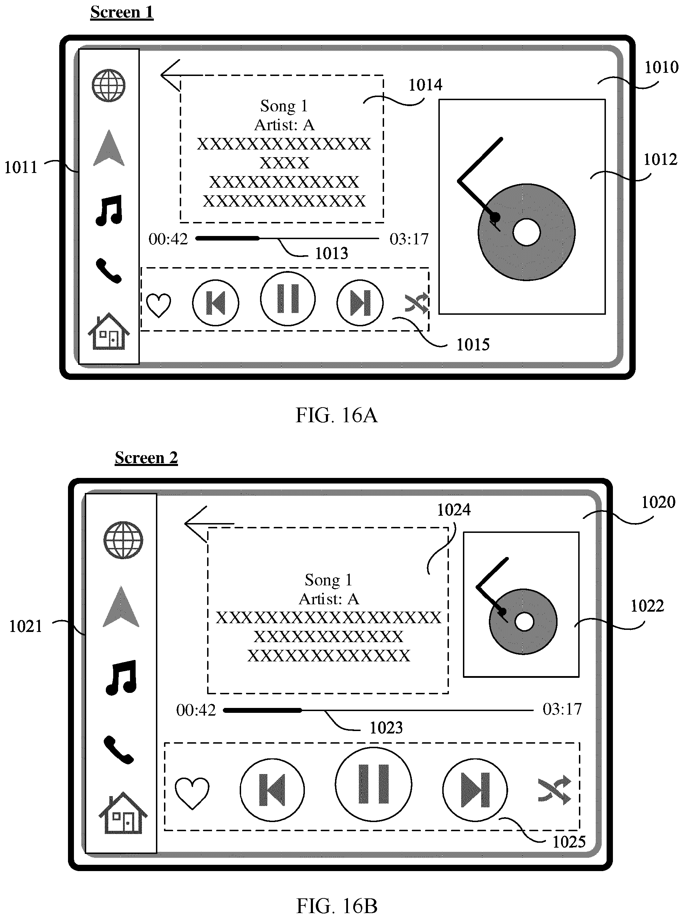

As shown in FIG. 16A to FIG. 16C, FIG. 16A to FIG. 16C show examples of display forms of a playback page interface of the music application on different screens. When the display of the electronic device 200 is a screen 1, FIG. 16A shows an example of a playback page interface 1010 of the map application in the electronic device 200. The playback page interface 1010 may include: a toolbar 1011, a music picture 1012, a progress bar 1013, music information 1014, and a control bar 1015.

When the display of the electronic device 200 is a screen 2, FIG. 16B shows an example of a playback page interface 1020 of the map application in the electronic device 200. The playback page interface 1020 may include a toolbar 1021, a music picture 1022, a progress bar 1023, music information 1024, and a control bar 1025.

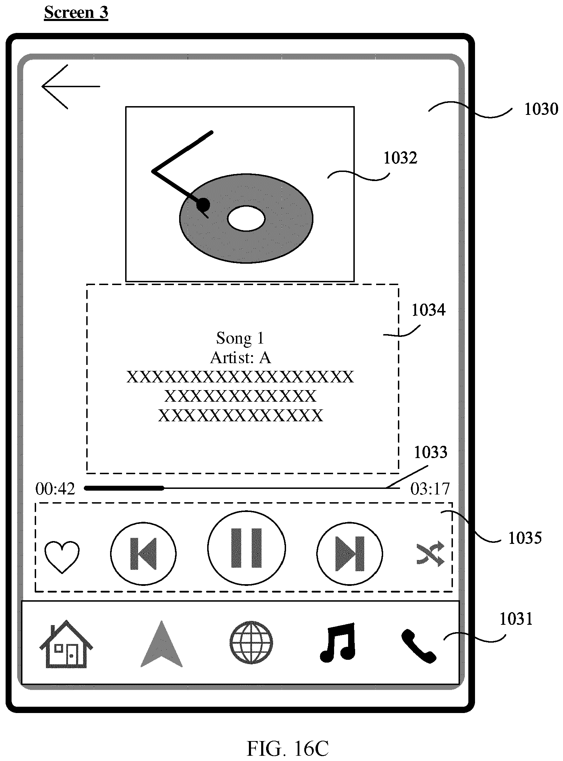

When the display of the electronic device 200 is a screen 3, FIG. 16C shows an example of a playback page interface 1030 of the map application in the electronic device 200. The playback page interface 1030 may include: a toolbar 1031, a music picture 1032, a progress bar 1033, music information 1034, and a control bar 1035.

It can be learned that, for different screens (the screen 1, the screen 2, and the screen 3), display content of the playback page interface 1010, the playback page interface 1020, and the playback page interface 1030 is basically the same, but display forms are different. For example, the music picture 1012 on the screen 1 is displayed on the right of the music information 1014 and the control bar 1015. On the screen 2, the music picture 1022 is displayed on the right of the music information 1024, and is displayed above the control bar 1025. On the screen 2, the music picture 1032 is displayed above the music information 1034, and the music information 1034 is displayed above the control bar 1035. In some embodiments, display forms (display locations, display sizes, and the like) of the toolbar 1011, the toolbar 1021, and the toolbar 1031 may alternatively be determined in another manner.

In embodiments of this application, for the foregoing three interfaces, when a screen is too small, if a size of the control remains unchanged, display may be abnormal. Therefore, this effect is ensured by a general rule. Optionally, a minimum width and a minimum height are set. When a screen width is greater than the set value, controls included in the interface are zoomed out as a whole, so that all screens can be used.

This application provides a chip system. The chip system is applied to an electronic device that includes a memory, a display, and a sensor. The chip system includes one or more interface circuits and one or more processors. The interface circuit and the processor are interconnected through a line. The interface circuit is configured to receive a signal from the memory, and send a signal to the processor. The signal includes computer instructions stored in the memory. When the processor executes the computer instructions, the electronic device performs the method in the foregoing embodiments.

The chip system may include one chip, or may include a plurality of chips. When the chip system includes the plurality of chips, parameters such as a type and a quantity of the chip are not limited in this application.

For example, this application provides a computer-readable storage medium. The computer-readable storage medium stores instructions. When the instructions are run on an electronic device, the electronic device is enabled to perform the method for adding a comment in the foregoing embodiments.

For example, this application provides a computer program product. When the computer program product runs on a computer, the computer is enabled to perform a method for adding a comment in the foregoing embodiments.

In the foregoing embodiments, all or some of the functions may be implemented through software, hardware, or a combination of software and hardware. When software is used to implement the embodiments, all or a part of the embodiments may be implemented in a form of a computer program product. The computer program product includes one or more computer instructions. When the computer program instructions are loaded and executed on a computer, procedures or functions according to the embodiments of this application are all or partially generated. The computer may be a general-purpose computer, a dedicated computer, a computer network, or other programmable apparatuses. The computer instructions may be stored in a computer-readable storage medium. The computer-readable storage medium may be a usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. An application access method, wherein the method comprises:
running, by a first electronic device, a target application, and obtaining first display content of the target application;
obtaining, by the first electronic device, a screen display parameter of the first electronic device;
obtaining, by the first electronic device, a screen display parameter of a second electronic device;
determining, by the first electronic device, first display data based on the first display content and the screen display parameter of the first electronic device;
determining, by the first electronic device, second display data based on the first display content and the screen display parameter of the second electronic device;
displaying, by the first electronic device, a first interface based on the first display data;
sending, by the first electronic device, the second display data to the second electronic device; and
displaying, by the second electronic device, a second interface on a display of the second electronic device based on the second display data, wherein a layout of a control in the first interface is different from a layout of a control in the second interface.

2. The method according to claim 1, wherein the method further comprises:
receiving, by the second electronic device, a first touch operation performed on the second interface;
sending, by the second electronic device, a touch parameter of the first touch operation to the first electronic device;
determining, by the first electronic device based on the touch parameter of the first touch operation and the second display data, a function triggered by the first touch operation;
obtaining, by the first electronic device, second display content of the target application based on the function triggered by the first touch operation;
determining, by the first electronic device, third display data based on the second display content and the screen display parameter of the second electronic device;
sending, by the first electronic device, the third display data to the second electronic device; and
displaying, by the second electronic device, a third interface on the display of the second electronic device based on the third display data.

3. The method according to claim 1, wherein the method further comprises:
receiving, by the first electronic device, a second touch operation performed on the first interface;
determining, by the first electronic device based on a touch parameter of the second touch operation and the first display data, a function triggered by the second touch operation;
obtaining, by the first electronic device, third display content of the target application based on the function triggered by the second touch operation;
determining, by the first electronic device, fourth display data based on the third display content and the screen display parameter of the first electronic device; and
displaying, by the first electronic device, a fourth interface based on the fourth display data.

4. The method according to claim 1, wherein the screen display parameter comprises a screen length and a screen width, and the method further comprises:
obtaining, by the first electronic device, a screen display parameter of a third electronic device, wherein a screen length of the third electronic device is greater than a screen length of the second electronic device;
determining, by the first electronic device, fifth display data based on the first display content and the screen display parameter of the third electronic device;
sending, by the first electronic device, the fifth display data to the third electronic device; and
displaying, by the third electronic device, a fifth interface on a display of the third electronic device based on the fifth display data, wherein a display length of a first function control in the fifth interface is greater than a display length of the first function control in the second interface.

5. The method according to claim 2, wherein when the target application is a map application, the first display content comprises a base map and one or more function controls, the one or more function controls comprise a search box control, and the second display content comprises a historical search record; and
the determining, by the first electronic device based on the touch parameter of the first touch operation and the second display data, a function triggered by the first touch operation specifically comprises:
determining, by the first electronic device based on the touch parameter of the first touch operation and the second display data, that the first touch operation is a user operation for the search box control.

6. The method according to claim 5, wherein the method further comprises:
receiving, by the second electronic device, a third touch operation performed on the third interface;
sending, by the second electronic device, a touch parameter of the third touch operation to the first electronic device;
determining, by the first electronic device based on the touch parameter of the third touch operation and the third display data, that the second touch operation is a user operation of entering first text into the search box control;
obtaining, by the first electronic device, first address information in which the first text is used as a destination;
determining, by the first electronic device, sixth display data based on the first address information and the screen display parameter of the second electronic device;
sending, by the first electronic device, the sixth display data to the second electronic device; and
displaying, by the second electronic device, a sixth interface on the display of the second electronic device based on the sixth display data.

7. The method according to claim 6, wherein the sixth display data comprises the first address information and a navigation start control; and the method further comprises:
receiving, by the second electronic device, a fourth touch operation performed on the sixth interface;
sending, by the second electronic device, a touch parameter of the fourth touch operation to the first electronic device;
determining, by the first electronic device based on the touch parameter of the fourth touch operation and the sixth display data, that the fourth touch operation is a user operation for the navigation start control;
obtaining, by the first electronic device, navigation information in which a current location of the second electronic device is used as a departure place and the first address information is used as a destination;
determining, by the first electronic device, seventh display data based on the navigation information and the screen display parameter of the second electronic device;
sending, by the first electronic device, the seventh display data to the second electronic device; and
displaying, by the second electronic device, a seventh interface on the display of the second electronic device based on the seventh display data.

8. The method according to claim 7, wherein the navigation information comprises at least one of the following: a distance to a next intersection, a driving direction at the next intersection, a name of a road at the next intersection, a remaining distance to the destination, a driving speed, a time required to reach the destination, a remaining time required to reach the destination, a real scene picture, a road condition, or driving route information.

9. The method according to claim 2, wherein when the target application is a music application, the first display content comprises one or more pictures and one or more function controls, the one or more function controls comprise a playback start control, and the second display content comprises playback progress indication information; and
the determining, by the first electronic device based on the touch parameter of the first touch operation and the second display data, a function triggered by the first touch operation specifically comprises:
determining, by the first electronic device based on the touch parameter of the first touch operation and the second display data, that the first touch operation is an operation for the playback start control.

10. The method according to claim 9, wherein the method further comprises: sending, by the first electronic device, audio data corresponding to the second display content to the second electronic device; and
playing, by the second electronic device, the audio data through a speaker of the second electronic device.

11. The method according to any one of claims 1 to 10, wherein the second electronic device is a vehicle-mounted terminal.

12. An application access system, comprising a first electronic device and a second electronic device, wherein the first electronic device is configured to run a target application, and obtain first display content of the target application;
the first electronic device is further configured to obtain a screen display parameter of the first electronic device;
the first electronic device is further configured to obtain a screen display parameter of the second electronic device;
the first electronic device is further configured to determine first display data based on the first display content and the screen display parameter of the first electronic device;
the first electronic device is further configured to determine second display data based on the first display content and the screen display parameter of the second electronic device;
the first electronic device is further configured to display a first interface based on the first display data;
the first electronic device is further configured to send the second display data to the second electronic device; and
the second electronic device is configured to display a second interface on a display of the second electronic device based on the second display data, wherein a layout of a control in the first interface is different from a layout of a control in the second interface.

13. The system according to claim 12, wherein the second device is further configured to receive a first touch operation performed on the second interface;
the second electronic device is further configured to send a touch parameter of the first touch operation to the first electronic device;
the first electronic device is further configured to determine, based on the touch parameter of the first touch operation and the second display data, a function triggered by the first touch operation;
the first electronic device is further configured to obtain second display content of the target application based on the function triggered by the first touch operation;
the first electronic device is further configured to determine third display data based on the second display content and the screen display parameter of the second electronic device;
the first electronic device is further configured to send the third display data to the second electronic device; and
the second electronic device is further configured to display a third interface on the display of the second electronic device based on the third display data.

14. The system according to claim 12, wherein the first electronic device is further configured to receive a second touch operation performed on the first interface;
the first electronic device is further configured to determine, based on the touch parameter of the second touch operation and the first display data, a function triggered by the second touch operation;
the first electronic device is further configured to obtain third display content of the target application based on the function triggered by the second touch operation;
the first electronic device is further configured to determine fourth display data based on the third display content and the screen display parameter of the first electronic device; and
the first electronic device is further configured to display a fourth interface based on the fourth display data.

15. The system according to claim 12, wherein the system further comprises a third electronic device; and the screen display parameter comprises a screen length and a screen width;
the first electronic device is further configured to obtain a screen display parameter of the third electronic device, wherein a screen length of the third electronic device is greater than a screen length of the second electronic device;
the first electronic device is further configured to determine fifth display data based on the first display content and the screen display parameter of the third electronic device;
the first electronic device is further configured to send the fifth display data to the third electronic device; and
the third electronic device is configured to display a fifth interface on a display of the third electronic device based on the fifth display data, wherein a display length of a first function control in the fifth interface is greater than a display length of the first function control in the second interface.

16. The system according to claim 13, wherein when the target application is a map application, the first display content comprises a base map and one or more function controls, the one or more function controls comprise a search box control, and the second display content comprises a historical search record; and
the first electronic device is further configured to determine, based on the touch parameter of the first touch operation and the second display data, that the first touch operation is a user operation for the search box control.

17. The system according to claim 16, wherein the second electronic device is further configured to receive a third touch operation performed on the third interface;
the second electronic device is further configured to send a touch parameter of the third touch operation to the first electronic device;
the first electronic device is further configured to determine, based on the touch parameter of the third touch operation and the third display data, that the second touch operation is a user operation of entering first text into the search box control;
the first electronic device is further configured to obtain first address information in which the first text is used as a destination;
the first electronic device is further configured to determine sixth display data based on the first address information and the screen display parameter of the second electronic device;
the first electronic device is further configured to send the sixth display data to the second electronic device; and the second electronic device is further configured to display a sixth interface on the display of the second electronic device based on the sixth display data.

18. The system according to claim 17, wherein the sixth display data comprises the first address information and a navigation start control; the second electronic device is further configured to receive a fourth touch operation performed on the sixth interface;
the second electronic device is further configured to send a touch parameter of the fourth touch operation to the first electronic device;
the first electronic device is further configured to determine, based on the touch parameter of the fourth touch operation and the sixth display data, that the fourth touch operation is a user operation for the navigation start control;
the first electronic device is further configured to obtain navigation information in which a current location of the second electronic device is used as a departure place and the first address information is used as a destination;
the first electronic device is further configured to determine seventh display data based on the navigation information and the screen display parameter of the second electronic device;
the first electronic device is further configured to send the seventh display data to the second electronic device; and
the second electronic device is further configured to display a seventh interface on the display of the second electronic device based on the seventh display data.

19. The system according to claim 18, wherein the navigation information comprises at least one of the following: a distance to a next intersection, a driving direction at the next intersection, a name of a road at the next intersection, a remaining distance to the destination, a driving speed, a time required to reach the destination, a remaining time required to reach the destination, a real scene picture, a road condition, or driving route information.

20. The system according to claim 13, wherein when the target application is a music application, the first display content comprises one or more pictures and one or more function controls, the one or more function controls comprise a playback start control, and the second display content comprises playback progress indication information; and
the first electronic device is further configured to determine, based on the touch parameter of the first touch operation and the second display data, that the first touch operation is an operation for the playback start control.

21. The system according to claim 20, wherein the first electronic device is further configured to send audio data corresponding to the second display content to the second electronic device; and
the second electronic device is further configured to play the audio data through a speaker of the second electronic device.

22. The system according to any one of claims 12 to 21, wherein the second electronic device is a vehicle-mounted terminal.

23. An electronic device, comprising one or more processors and one or more memories, wherein the one or more memories are separately coupled to the one or more processors; the one or more memories are configured to store computer program code, and computer program code comprises computer instructions; and when the computer instructions are run on the processor, the electronic device is enabled to perform the application access method performed by the first electronic device or the second electronic device according to any one of claims 1 to 11.

24. A computer-readable storage medium, comprising computer instructions, wherein when the computer instructions are run on an electronic device, the electronic device is enabled to perform the application access method according to any one of claims 1 to 11.
